# EUROPÄISCHE PATENTANMELDUNG

(11) **EP 4 850 898 A1**
(43) Veröffentlichungstag der Anmeldung: **09.12.2026**
(21) Anmeldenummer: 26182060.9
(22) Anmeldetag: 29.05.2026
(51) Int. Cl.: B30B 7/02, B29C 43/50

(54) **PRESSE MIT EINER MEHRZAHL VON PRESSENETAGE UND MIT MINDESTENS EINER ZUGMITTELEINRICHTUNG SOWIE VERFAHREN**

(30) Priorität: 02.06.2025 DE 102025121455
(71) Anmelder: Maschinenfabrik Lauffer GmbH & Co. KG, 72160 Horb a. N (DE)
(72) Erfinder: Dr. Freundt, Martin, 73732 Esslingen (DE)
(74) Vertreter: Kanzlei Dr. Negendanck Patentmanufaktur

(57) **Zusammenfassung**

Die Erfindung betrifft eine Presse 1 mit einer Mehrzahl von Pressenetagen 2, wobei die Pressenetagen 2 in einem Stapel anordenbar 7 sind, mit einer Andrückeinrichtung 3 zum Ausüben einer Andrückkraft auf den Stapel 7, mit einer Anschlageinrichtung 4, wobei der Stapel 7 zwischen der Andrückeinrichtung 3 und der Anschlageinrichtung 4 angeordnet und/oder anordenbar ist, so dass der Stapel 7 mit der Andrückkraft beaufschlagt werden kann, mit einer Verfahranordnung 19 zum Verfahren der Pressenetagen 2 in Richtung der Anschlageinrichtung, wobei die Verfahranordnung 19 mindestens ein Zugmittel 35 für jede der Pressenetagen 2 aufweist, wobei das Zugmittel 35 mit der Pressenetage 2 wirkverbunden ist, um die Pressenetage 2 in Richtung der Anschlageinrichtung 4 zu verfahren, wobei die Verfahranordnung 19 mindestens eine Zugmitteleinrichtung 34 aufweist, wobei die Zugmitteleinrichtung 34 ein Zugmittelführungsmodul 40 und ein Federwirkmodul 41 aufweist, wobei das Zugmittelführungsmodul 40 das Zugmittel 35 führt und das Federwirkmodul 41 das Zugmittelführungsmodul 40 mit einer Federkraft beaufschlagen kann, so dass die Federkraft über das Zugmittelführungsmodul 40 auf das Zugmittel 35 gegen die Gewichtskraft der wirkverbundenen Pressenetage 2 wirkt.

## Beschreibung

Die Erfindung betrifft eine Presse mit einer Mehrzahl von Pressenetagen mit den Merkmalen des Oberbegriffs des Anspruchs 1 sowie ein Verfahren.

Mehretagenpressen werden verwendet, um zeitgleich mehrere Werkstücke mit Druck zu beaufschlagen. Die Etagen der Presse werden beim Zufahren der Presse zu einem Stapel verfahren und mit der Pressenkraft beaufschlagt.

Die Druckschrift US 2,941,249 offenbart eine Mehretagenpresse, wobei die Etagen der Presse über eine Seilkonstruktion zu einem Stapel zusammengefahren werden, um diese mit der Pressenkraft nachfolgend zu beaufschlagen. Jede der Etagen ist an einer Mehrzahl von Seilzügen aufgehängt, wobei an der Unterseite der Etagen jeweils Druckfedern zwischen einem Endpunkt der Seilzüge und der Unterseite der Etagen vorgesehen sind.

Es ist Aufgabe der vorliegenden Erfindung, eine Presse mit einer Mehrzahl von Pressenetagen vorzuschlagen, welche neue Funktionen ermöglicht.

Diese Aufgabe wird durch eine Presse mit den Merkmalen des Anspruchs 1 sowie durch ein Verfahren mit den Merkmalen des Anspruchs 15 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Presse mit einer Mehrzahl von Pressenetagen. Die Pressenetagen weisen bevorzugt jeweils einen Grundkörper, ein Traggestellt oder ähnliches auf. Die Pressenetagen können beispielsweise Heizplatten oder Kühlplatten, allgemein temperierten Platten oder Temperierplatten, aufweisen oder durch diese gebildet sein, um Werkstücke, welche auf die Pressenetagen platziert werden können, zu temperieren. Die Presse kann insbesondere mehr als drei, vorzugsweise mehr als fünf Pressenetagen, im Speziellen mehr als 10 oder 20 Plattenetagen aufweisen. Die Presse ist insbesondere als eine Mehretagenpressen ausgebildet. Insbesondere kann die Presse als eine Vakuumpresse ausgebildet sein. Insbesondere ist jede Pressenetage in einem vereinzelten Zustand im Vergleich zu einer anderen Pressenetage mit unterschiedlicher Geschwindigkeit bewegbar.

Bei den Werkstücken handelt es sich insbesondere um flächige Werkstücke, wie zum Beispiel Leiterplatten (PCB), Elektrodenbaugruppen als Batterierohlinge, z.B. für Stacks, Vorprodukte zur Batteriefertigung für Traktionsbatterien in der Automobilindustrie mit Elektroden etc., Laminate, Solarzellen, Verbundglasscheiben oder dergleichen.

Die Presse hat die Funktion die Werkstücke - optional unter Temperierung - zu verpressen. Die Pressenetagen optional mit den Werkstücken sind in der Presse in einem Stapel anordnenbar, insbesondere angeordnet. Insbesondere ist in den Pressenetagen jeweils genau ein Werkstück oder mehrere Werkstücke mit bezüglich ihrer Dicke und Druckfestigkeit für das gemeinsame Verpressen geeigneten Eigenschaften angeordnet. Die Presse weist eine Andrückeinrichtung zum Ausüben einer Andrückkraft, insbesondere Pressenkraft, auf den Stapel auf. Insbesondere ist die Andrückeinrichtung bodenseitig angeordnet. Beispielsweise ist die Andrückeinrichtung als ein verschiebbarer Stempel ausgebildet oder weist diesen auf, welcher mittelbar oder unmittelbar die Andrückkraft auf dem Stapel erzeugt.

Die Presse weist weiterhin eine Anschlageinrichtung auf, wobei der Stapel zwischen der Andrückeinrichtung und der Anschlageinrichtung angeordnet ist. Die Anschlageinrichtung ist insbesondere an einem oberen Bereich über der Andrückeinrichtung angeordnet. Der Stapel kann somit zwischen der Andrückeinrichtung und der Anschlageinrichtung mit der Andrückkraft beaufschlagt werden. Die Andrückkraft wird im Stapel insbesondere über die Temperierplatten übertragen. Optional umfasst die Presse das oder die Werkstücke. Optional sind die Werkstücke in der Presse in Werkstückträgern angeordnet, wobei die Presse die Werkstückträger umfassen kann.

Die Presse weist eine Verfahranordnung zum Verfahren der Pressenetagen in Richtung der Anschlageinrichtung auf. Die Verfahranordnung weist mindestens ein Zugmittel vorzugsweise mindestens zwei Zugmittel besonders bevorzugt vier Zugmittel für jede der Pressenetagen auf. Das Zugmittel ist mit der jeweiligen Pressenetage wirkverbunden, insbesondere fest und/oder unflexibel verbunden, um die Pressenetage ziehend in Richtung der Anschlageinrichtung zu verfahren. Das Zugmittel kann insbesondere als ein Band, ein Seil oder dergleichen ausgebildet sein.

Optional weist die Presse eine weitere Verfahranordnung auf, wie diese zuvor oder nachfolgend beschrieben ist, wobei die weitere Verfahranordnung gegenläufig zu der Verfahranordnung ausgebildet ist und ein kontrolliertes Öffnen der Presse ermöglicht. Die weitere Verfahranordnung weist mindestens ein weiteres Zugmittel vorzugsweise mindestens zwei weitere Zugmittel besonders bevorzugt vier weitere Zugmittel für jede der Pressenetagen auf. Das weitere Zugmittel ist mit der jeweiligen Pressenetage wirkverbunden, insbesondere fest und/oder unflexibel verbunden, um die Pressenetage ziehend in Richtung der Andrückeinrichtung zu verfahren. Die weitere Verfahranordnung ist ausgebildet, die Pressenetagen bei einem Öffnen der Presse zu vereinzeln. Die weitere Verfahranordnung weist Zugmittel auf, welche ausgebildet sind, die Pressenetagen in Richtung der Gewichtskraft zu ziehen, um ein sicheres Öffnen der Presse, insbesondere ein sicheres Vereinzeln der Pressenetagen z.B. bei einem Verkleben der Werkstücke mit den Pressenetagen zu ermöglichen.

Die Verfahranordnung weist mindestens eine Zugmitteleinrichtung auf. Es kann vorgesehen sein, dass jedem der Zugmittel eine eigene Zugmitteleinrichtung zugeordnet ist. Es kann auch vorgesehen sein, dass allen Zugmitteln von einer Pressenetage eine gemeinsame Zugmitteleinrichtung oder zwei gegenüberliegenden Zugmitteleinrichtungen zugeordnet ist bzw. sind.

Die Zugmitteleinrichtung weist ein Zugmittelführungsmodul und ein Federwirkmodul auf. Das Zugmittelführungsmodul führt das zugeordnete Zugmittel, wobei es insbesondere das zugeordnete Zugmittel trägt. Das Federwirkmodul ist ausgebildet, das Zugmittelführungsmodul mit einer Federkraft zu beaufschlagen. Insbesondere kann das Zugmittelführungsmodul in Richtung oder in Gegenrichtung zu der Federkraft in einer Auslenkrichtung verfahren werden. Durch diesen Aufbau wirkt die Federkraft zumindest in einem Zustand der Zugmitteleinrichtung als Zugkraft auf das Zugmittel gegen die Gewichtskraft der wirkverbundenen Pressenetage und zieht in diesem Zustand die Pressenetage gegen die Gewichtskraft der Pressenetage.

Insbesondere ist die Zugmitteleinrichtung ausgebildet, eine Wirklänge des Zugmittels an der Plattenetage elastisch und/oder federnd zu verändern. Die Wirklänge des Zugmittels bezeichnet die effektive Länge des Zugmittels in der Presse von einem beliebigen pressenfesten Bezugspunkt bis zur Anbindung an die Pressenetage unter Berücksichtigung der Zugmitteleinrichtung. Wird das Zugmittel durch die Zugmitteleinrichtung ausgefahren, so wird die Wirklänge länger, wird das Zugmittel durch die Zugmitteleinrichtung zurückgefahren, so wird die Wirklänge kürzer.

Es ist eine Überlegung der Erfindung, dass durch die Zugmitteleinrichtung, welche insbesondere eine Zugkraft auf das Zugmittel ausübt, die Pressenetagen während des Pressvorgangs besser kontrolliert werden können und dadurch neue Funktionen umgesetzt werden können. Zumindest bildet die Zugmitteleinrichtung eine Alternative zum Stand der Technik. Insbesondere ist die Zugmitteleinrichtung ausgebildet, das Zugmittel "auf Zug" zu halten, so dass das Zugmittel nicht schlaff wird und damit einen undefinierten Zustand einnimmt. Insbesondere bei dem Übergang zu der geschlossenen Presse, also insbesondere bei einem Schließen des Stapels oder nach einem Schließen des Stapels, wirkt die Federkraft auf das Zugmittel, so dass die Plattenetage über das Federwirkmodul elastisch in Richtung der Anschlageinrichtung vorgespannt ist. Durch die elastische Vorspannung wird eine Weg- oder Längenkompensation für das Zugmittel beim Schließen der Presse erreicht. Für den umsetzbaren Fall, dass das Zugmittel in der Länge zu kurz für die Endposition in dem Stapel nach dem Schließen der Presse ausgebildet ist, kann über das Federwirkmodul durch ein Auslenken des Zugmittelführungsmoduls der fehlende Weg des Zugmittels kompensiert werden. Insbesondere ist die Zugmitteinrichtung so ausgebildet, dass das Zugmittel auch bei geschlossener Presse gespannt ist.

Insbesondere ist die Zugmitteleinrichtung, einige der Zugmitteleinrichtungen oder alle der Zugmitteleinrichtungen oberhalb von der Anschlageinrichtung und/oder der Pressenetagen angeordnet und/oder außerhalb eines Volumens, welches zwischen der Andrückeinrichtung und der Anschlageinrichtung gebildet ist, angeordnet.

Bei einer bevorzugten Realisierung der Erfindung ist die Verfahranordnung ausgebildet, die Abstände zwischen den Pressenetagen beim Öffnen und/oder beim Schließen der Presse, insbesondere bei bereits vereinzelten und/oder voneinander getrennten Pressenetagen parallel und/oder zeitgleich zu verändern. Insbesondere wird der Stapel akkordeonartig geöffnet und/oder geschlossen. Besonders bevorzugt werden die Pressenetagen zeitgleich auseinander und/oder zusammen gefahren.

Es ist besonders bevorzugt, dass jede der Pressenetagen mit mindestens einem Zugmittel angebunden ist. Auf diese Weise können alle Pressenetagen zeitgleich auseinander und/oder zusammengefahren werden.

Es ist besonders bevorzugt, dass die Zugmittel mit der Andrückeinrichtung wirkverbunden sind und/oder von der Andrückeinrichtung angetrieben werden. Auf diese Weise kann auf einen zusätzlichen Antrieb für die Verfahranordnung verzichtet werden, wobei zugleich die Synchronisation zwischen der Andrückeinrichtung und der Pressenetage mechanisch vorgegeben ist.

Bei einer bevorzugten konstruktiven Ausgestaltung ist das Zugmittelführungsmodul als eine Führungsrolle oder als ein Gleitkörper, wie z.B. als ein Gleitschuh, ausgebildet. Insbesondere erfolgt über das Zugmittelführungsmodul, insbesondere die Führungsrolle oder den Gleitkörper, eine Richtungsumlenkung des Zugmittels. Im Speziellen wird das Zugmittel durch das Zugmittelführungsmodul getragen. Besonders bevorzugt verläuft das Zugmittel nach dem Zugmittelführungsmodul senkrecht in Richtung der Andrückeinrichtung zu der zugeordneten Pressenetage und/oder ist zumindest senkrecht ausgerichtet.

Bevorzugt ist das Federwirkmodul als ein Federmodul ausgebildet. Das Federmodul kann eine Druckfeder oder eine Zugfeder, insbesondere eine Spiralfeder oder Blattfeder, zur Erzeugung der Federkraft aufweisen. Besonders einfach lässt sich das Federmodul als Zugfedermodul mit der Druckfeder realisieren. Bevorzugt ist das Federmodul konstruktiv so ausgebildet, dass dieses als Zugfedermodul auf das Zugmittelführungsmodul wirkt.

Bei einer bevorzugten Ausgestaltung ist die Zugmitteleinrichtung ausgebildet, bei insbesondere teilweise oder vollständig geöffneter Presse das Zugmittelführungsmodul in mindestens einer Auslenkrichtung, lagedefiniert zu halten, so dass die Pressenetage über das Zugmittel in einer definierten Höhenposition angeordnet ist. Lagedefiniert bedeutet insbesondere, dass auch bei einer Änderung der Masse oder des Gewichts der Pressenetage, zum Beispiel bei einem Beladen oder Entladen von einem Werkstück, sich die Lage des Zugmittelführungsmoduls und damit die Höhenposition der Pressenetage nicht ändert. Die Lagedefinition kann formschlüssig, reibschlüssig und/oder kraftschlüssig ausgebildet sein. Diese bevorzugte Ausgestaltung führt dazu, dass die Pressenetage zum Beispiel automatisiert mit dem Werkstück beladen und/oder entladen werden können, da sich bei dem Beladevorgang bzw. Entladevorgang die Höhenposition der Pressenetage nicht ändert. Insbesondere ist die Zugmitteleinrichtung so abgestimmt, dass ein Einfedern der Pressenetage nach unten bei dem Beladen mit dem Werkstück oder ein Ausfedern der Pressenetage nach oben bei dem Entladen mit dem Werkstück verhindert ist.

Dagegen wirkt bei dem Übergang zu der geschlossenen Presse, also insbesondere bei einem Schließen des Stapels oder nach einem Schließen des Stapels, die Federkraft auf das Zugmittel, so dass die Plattenetage über das Federwirkmodul elastisch in Richtung der Anschlageinrichtung vorgespannt ist. Durch die elastische Vorspannung wird eine Weg- oder Längenkompensation für das Zugmittel beim Schließen der Presse erreicht. Für den umsetzbaren Fall, dass das Zugmittel in der Länge zu kurz für die Endposition in dem Stapel nach dem Schließen der Presse ausgebildet ist, kann über das Federwirkmodul durch ein Auslenken des Zugmittelführungsmoduls der fehlende Weg des Zugmittels kompensiert werden. Insbesondere ist die Zugmitteinrichtung so ausgebildet, dass das Zugmittel auch bei geschlossener Presse gespannt ist.

Bei einer ersten möglichen Ausgestaltung ist mindestens eine der Zugmitteleinrichtungen als eine Zugmittelführungsmodulanschlageinrichtung ausgebildet. Diese ist so ausgebildet, dass die Zugmittelführungsmodulanschlageinrichtung bei geöffneter Presse das Zugmittelführungsmodul in einem Anschlagzustand lagedefiniert hält. In dem Anschlagzustand ist das Zugmittelführungsmodul insbesondere in einer mechanischen Anschlagposition. Durch den Anschlagzustand des Zugmittelführungsmoduls ist dieses lagedefiniert, so dass auch das Zugmittel lagedefiniert und damit die angebundene Pressenetage in der Höhenposition definiert gehalten wird, da das Zugmittelführungsmodul in die Anschlagrichtung nicht ausweichen kann.

Bei einer möglichen Variation befindet sich die Zugmittelführungsmodulanschlageinrichtung in einem Maximalwirklängenanschlagzustand, wobei das Zugmittelführungsmodul in einer Anschlagposition ist, so dass eine Maximalwirklänge des Zugmittels bewirkt wird. Insbesondere kann das Zugmittelführungsmodul nicht weiter verfahren werden, um das Zugmittel in seiner Wirklänge zu verlängern. Das Federwirkmodul ist in diesem Zustand gespannt. Im Maximalwirklängenschlagzustand kann das Zugmittel durch das Zugmittelführungsmodul nicht weiter ausgefahren (verlängert) werden, so dass die Maximalwirklänge für das Zugmittel an der Pressenetage bewirkt wird. Damit ist auch die Höhenposition der Pressenetage bei einem Beladen oder Entladen mit einem Werkstück höhendefiniert. In dem Maximalwirklängenanschlagzustand bildet die Zugmittelführungsmodulanschlageinrichtung insbesondere einen formschlüssigen Anschlag für das Zugmittel gegen die Gewichtskraft der Pressenetage.

Bei einer anderen, möglichen Variation befindet sich die Zugmittelführungsmodulanschlageinrichtung bei geöffneter Presse in einem Minmalwirklängenanschlagzustand, wobei das Zugmittelführungsmodul in einer Anschlagposition ist, so dass eine Minimalwirklänge des Zugmittels bewirkt wird. Insbesondere kann das Zugmittelführungsmodul nicht weiter verfahren werden, um das Zugmittel in seiner Wirklänge zu verkürzen. Das Federwirkmodul ist in diesem Zustand nur teilgespannt. Im Minmalwirklängenanschlagzustand kann das Zugmittel durch das Zugmittelführungsmodul nicht weiter eingefahren (verkürzt) werden, so dass eine Minimalwirklänge für das Zugmittel an der Pressenetage bewirkt wird, wobei die Höhenposition der Pressenetage auch bei einem Beladen oder Entladen mit einem Werkstück höhendefiniert ist. In dem Minmalwirklängenanschlagzustand bildet die Zugmittelführungsmodulanschlageinrichtung insbesondere einen kraftschlüssigen Anschlag für das Zugmittelführungsmodul gegen die Gewichtskraft der Pressenetage.

Bei einer weiteren Alternative ist die Zugmitteleinrichtung als eine Zugmittelführungsmodulsperreinrichtung ausgebildet, wobei die Zugmittelführungsmodulsperreinrichtung bei geöffneter Presse das Zugmittelführungsmodul in beide oder alle Auslenkrichtungen lagedefiniert hält, insbesondere sperrt. Die Zugmittelführungsmodulsperreinrichtung kann beispielsweise dadurch umgesetzt werden, dass eine Bewegung des Zugmittelführungsmoduls mechanisch gesperrt ist. Alternativ kann diese dadurch eingesetzt werden, dass das Federwirkmodul zusätzlich vorgespannt wird, so dass dieses "auf Block" geht und seine Federwirkeigenschaften verliert. Bei beiden Varianten ist das Zugmittel lagedefiniert und damit die Pressenetage für ein Beladen oder Entladen der Pressenetage in der Höhenposition definiert.

Bei einer weiteren Alternative ist die Zugmitteleinrichtung als eine Zugmittelvorspannungsänderungseinrichtung ausgebildet, wobei bei geöffneter Presse die Zugmitteländerungseinrichtung eine Vorspannung auf das Zugmittelführungsmodul ändert, so dass das Zugmittelführungsmodul in einem Minimalwirklängenanschlagzustand lagedefiniert ist und eine Minimalwirklänge für das Zugmittel an der Pressenetage bewirkt oder dass das Zugmittelführungsmodul in einem Maximalwirklängenanschlagzustand lagedefiniert ist und eine Maximalwirklänge für das Zugmittel an der Pressenetage bewirkt. Insbesondere kann durch eine Änderung der Vorspannung künstlich der Maximalwirklängenanschlagzustand oder der Minimalwirklängenanschlagzustand herbeigeführt oder stabilisiert werden. Bei dieser Alternative wird somit bei dem Übergang zu der geöffneten Presse in die Vorspannung eingegriffen, um das Zugmittelführungsmodul lagedefiniert zu halten.

Bei einer bevorzugten Weiterbildung ist ein Offset des Zugmittels in der Wirklänge und/oder eine Federkraft oder eine Vorspannung des Federwirkmoduls bei der Zugmitteleinrichtung manuell oder automatisiert einstellbar. Der Offset kann beispielsweise durch einen örtlichen Versatz der Zugmitteleinrichtung in oder gegen die Zugmittelrichtung oder durch eine verstellbare Umlenkrolle etc. erfolgen. Die Einstellung der Federkraft kann durch eine Änderung der Vorspannung des Federwirkmoduls einstellbar sein. Beispielsweise wird bei dem Federmodul eine Auszugslänge oder ein Anschlag der Feder voreingestellt verändert. Auf diese Weise können die Eigenschaften der Zugmitteleinrichtung zum Beispiel in Abhängigkeit der geplanten Werkstücke, insbesondere in Bezug auf das Gewicht der Pressenetage mit dem geplanten Werkstück manuell oder automatisiert eingestellt, werden. Optional kann die Zugmitteleinrichtung einen Aktor, insbesondere einen pneumatischen Aktor oder einen elektromechanischen Aktor, wie z.B. eine Elektrospule, zur Änderung der Vorspannung des Federwirkmoduls oder wirksamen Länge des Seils aufweisen.

Bei einer bevorzugten Weiterbildung der Erfindung sind die Zugmitteleinrichtungen der Zugmittel für die Pressenetagen so ausgewählt und/oder eingestellt, dass beim Übergang in den geschlossenen Pressenzustand Unterschiede bei den Anlagekräften der Pressenetagen in dem Stapel kompensiert werden und/oder eingestellt werden können. Betrachtet man beispielsweise klassische Pressen, welche mehrere Etagen durch den Stempel in der Presse von unten nacheinander in den Stapel schieben, so wird die unterste Etage aufgrund der Tatsache, dass diese vor dem Schließen des Stapels die anderen Etagen tragen muss, eine höhere Anlagekraft haben. Dies führt zu unterschiedlichen Bedingungen bei dem Pressvorgang. Dagegen können über die Auswahl und/oder Einstellung der Zugmitteleinrichtungen die Anlagekräfte selektiv eingestellt werden, um z.B. kumulierende Gewichtskräfte zu vermeiden. Insbesondere sind die Anlagekräfte selektiv eingestellt und/oder unterschiedlich.

Beim Zusammenfahren des Stapels kann beispielsweise vorgesehen sein, dass mindestens eine Pressenetage zuerst an dem darüber angeordneten Stapelpartner anliegt und mindestens eine Pressenetage zuerst an dem darunter angeordneten Stapelpartner anliegt. Auf diese Weise wird die Gewichtskraft nicht wie bei der klassischen Presse kumuliert, so dass die unterste Etage mit der höchsten Gewichtskraft beaufschlagt wird, sondern dass ein Teil der Pressenetagen in Richtung der Anschlageinrichtung vorgespannt sind und ein anderer Teil der Pressenetagen dagegen von dem darunterliegenden Stapelpartner nach oben geschoben wird.

Werden beispielsweise die Pressenetagen in dieser Weise alternierend, d.h. dass eine Pressenetage nach unten abgelassen ist und die Pressenetage darunter nach oben vorgespannt ist, über die jeweils zugeordnete Zugmitteleinrichtung bewegt, so legen sich diese zwei Pressenetagen mit verminderten Anschlagkräften an die andere Pressenetage in dem Stapel an. Damit können die resultierende Anlagekräfte für jede Pressenetage weitgehend gleich gestaltet werden. Alternativ hierzu kann auch ein oberer Abschnitt des Stapels durch die Zugmitteleinrichtungen gegen die Anschlageinrichtung gezogen werden und ein unterer Abschnitt des Stapels durch den jeweils unteren Stapelpartner bzw. die Andrückeinrichtung nach oben geschoben werden, so dass die unterste Pressenetage des unteren Abschnitts nur maximal das Gewicht des unteren Abschnitts tragen muss und die oberste Pressenetage des oberen Abschnitts mit nur maximal der kumulierten Vorspannung der Pressenetagen des oberen Abschnitts beaufschlagt wird.

Beispielsweise kann dem Übergang in den geschlossenen Pressenzustand mindestens eine der Zugmittelführungsmodulanschlageinrichtungen in dem Maximalwirklängenanschlagzustand und mindestens eine der Zugmittelanschlageinrichtungen in dem Minimalwirklängenanschlagzustand sein.

Die Presse weist bevorzugt mindestens eine Förderbandeinrichtung zum Transport von einem Werkstück für mindestens eine der Pressenetagen auf. Die Förderbandeinrichtung umfasst insbesondere ein Förderband zur Anlage an das Werkstück. Die Förderbandeinrichtung kann ferner mindestens oder genau eine erste Förderrolle und eine zweite Förderrolle zum Fördern des Förderbands aufweisen.

Optional ergänzend wird vorgeschlagen, dass die Förderbandeinrichtung, insbesondere umfassend das Förderband und die erste sowie die zweite Förderrolle, mit der Pressenetage verbunden ist, sodass die Förderbandeinrichtung mit der Pressenetage beim Öffnen und Schließen der Presse mitgeführt wird. Insbesondere wird die Förderbandeinrichtung von der Pressenetage getragen. Damit wird die Förderbandeinrichtung bei einer Aufwärtsbewegung und bei einer Abwärtsbewegung der Pressenetage parallel mitgeführt. Insbesondere ist die Förderbandeinrichtung mit der Pressenetage starr und/oder fest verbunden.

Es ist dabei eine weiterführende Überlegung, dass durch die mitgeführte Förderbandeinrichtung die Presse mit der Verfahranordnung zum Beispiel nur so weit geöffnet werden muss, wie dies für eine Beladung oder Entladung mit dem Werkstück notwendig ist. Dabei ist die Förderbandeinrichtung stets richtig positioniert, da diese von der Pressenetage mitgeführt wird. Auf diese Weise kann eine Automatisierung beschleunigt und damit verbessert werden.

Bei einer ersten möglichen Ausgestaltung ist mindestens eine der Förderbandeinrichtungen als eine Pressenförderbandeinrichtung ausgebildet, wobei die Pressenförderbandeinrichtung, insbesondere das Förderband, in dem Stapel, im Speziellen im geschlossenen Zustand der Presse, und/oder in dem Pressenraum, also in dem Bereich zwischen der Andrückeinrichtung und der Anschlageinrichtung angeordnet ist. Durch die Pressenförderbandeinrichtung kann die Pressenetage mit dem Werkstück beladen und/oder entladen werden. Insbesondere wird das Förderband der Pressenförderbandeinrichtung bei dem Pressen des Stapels mit verpresst.

Dabei kann vorgesehen sein, dass das Förderband der Pressenförderbandeinrichtung auf einer Oberseite der Pressenetage angeordnet ist, so dass das Werkstück auf das Förderband aufgelegt werden kann. Alternativ oder ergänzend kann das Förderband der Pressenförderbandeinrichtung auf einer Unterseite der Pressenetage angeordnet sein, so dass das Förderband an der Oberseite von einem darunter liegenden Werkstück anliegt. In beiden Fällen kann das Werkstück durch die Pressenförderbandeinrichtung abtransportiert werden. Besonders bevorzugt ist eine Pressenförderbandeinrichtung auf der Oberseite der Pressenetage und eine weitere Pressenförderbandeinrichtung auf der Unterseite der in Höhenrichtung nachfolgende Pressenetage angeordnet, so dass das Werkstück beidseitig transportiert werden kann. Durch die Ausbildung der Förderbandeinrichtung als Pressenförderbandeinrichtung kann das Werkstück sehr schnell abtransportiert werden, so dass die Automatisierung der Presse verbessert ist.

Bei einer alternativen Ausgestaltung oder einer Weiterbildung ist mindestens eine mitfahrende Förderbandeinrichtung als eine Zuführförderbandeinrichtung zur Zuführung des Werkstücks zu der Pressenetage und/oder zu der Pressenförderbandeinrichtung ausgebildet. Alternativ oder ergänzend ist mindestens eine mitfahrende Förderbandeinrichtung als eine Abführförderbandeinrichtung zur Abführung des Werkstücks von der Pressenetage und/von der Pressenförderbandeinrichtung ausgebildet. Betrachtet man den Werkstückfluss, so ist die Zuführförderbandeinrichtung vor der Pressenetage und/oder der Pressenförderbandeinrichtung der Pressenetage angeordnet und die Abführförderbandeinrichtung hinter der Pressenetage und/oder der Pressenförderbandeinrichtung angeordnet. Insbesondere wird das Werkstück insbesondere in einer gemeinsamen Förderrichtung von der Zuführförderbandeinrichtung insbesondere unmittelbar an die Pressenetage und/oder die Pressenförderbandeinrichtung übergeben und nachfolgend verpresst. Danach wird das Werkstück von der Pressenförderbandeinrichtung insbesondere unmittelbar an die Abführförderbandeinrichtung übergeben. Dadurch, dass die Zuführförderbandeinrichtung und/oder die Abführförderbandeinrichtung mit der Pressenetage verbunden ist, ist diese stets für eine Zuführung bzw. Abführung des Förderbands richtig positioniert.

Bei einer bevorzugten Weiterbildung weisen eine Mehrzahl der Pressenetagen oder alle Pressenetagen jeweils eine der Zuführförderbandeinrichtungen auf. Die Zuführförderbandeinrichtungen sind in Stapelrichtung voneinander so beabstandet, dass bei geschlossener Presse insbesondere mit eingelegtem Werkstück ein Zuführspalt zur Zuführung des Werkstücks auf die Zuführförderbandeinrichtung verbleibt. Insbesondere ist der Zuführspalt vorhanden, wenn der Stapel verpresst wird.

Alternativ oder ergänzend weisen eine Mehrzahl der Pressenetagen oder alle Pressenetagen jeweils eine der Abführförderbandeinrichtungen auf. Die Abführförderbandeinrichtungen sind in Stapelrichtung voneinander so beabstandet, dass bei geschlossener Presse insbesondere eingelegten Werkstück ein Abführspalt zur Abführung des Werkstücks von der Abführförderbandeinrichtung verbleibt. Insbesondere ist der Abführspalt vorhanden, wenn der Stapel verpresst wird.

Beide Varianten weisen den Vorteil auf, dass das jeweilige Werkstück in die Zuführförderbandeinrichtung eingefahren werden kann bzw. aus der Abführförderbandeinrichtung ausgefahren werden kann, auch wenn die Presse geschlossen ist, insbesondere während ein Pressvorgang durchgeführt wird. Auf diese Weise kann eine Totzeit während des Pressvorgangs zum Zuführen des Werkstücks in die Zuführförderbandeinrichtung und/oder das Abführen des Werkstücks aus der Abführförderbandeinrichtung genutzt werden, so dass die Automatisierung verbessert ist.

Besonders in diesem Zusammenhang ist es besonders bevorzugt, dass die Presse eine Beladeeinrichtung aufweist, welche ausgebildet ist, die Zuführförderbandeinrichtung mit den Werkstücken, insbesondere bei geschlossener Presse zu beladen. Alternativ oder ergänzend weist die Presse eine Entladeeinrichtung zum Entladen der Werkstücke von den Abführförderbandeinrichtungen auf, wobei die Entladeeinrichtung insbesondere ausgebildet ist, die Werkstücke bei geschlossener Presse zu entladen.

Die Beladeeinrichtung und/oder Entladeeinrichtung kann ausgebildet sein, alle oder einige der Zuführförderbandeinrichtungen bzw. der Abführförderbandeinrichtungen parallel zu versorgen. Bevorzugt ist die Beladeeinrichtung ausgebildet die Zuführförderbandeinrichtungen gleichzeitig, teilweise gleichzeitig oder seriell und/oder nacheinander zu beladen. Alternativ oder ergänzend ist die Entladeeinrichtung ausgebildet, die Abführbandeinrichtungen gleichzeitig, teilweise gleichzeitig oder seriell und/oder nacheinander zu entladen. Nachdem beim Beladen und/oder Entladen die Totzeit während des Pressvorgangs genutzt wird, ist es auch möglich, dass die Beladeeinrichtung und/oder die Entladeeinrichtung die jeweiligen Förderbandeinrichtungen sukzessive belädt bzw. entlädt. Damit können Kosten bei der Systemtechnik eingespart werden, ohne die Automatisierung und die Taktzeit zu verschlechtern.

Bei einer bevorzugten Ausgestaltung ist die Presse ausgebildet, die Abstände zwischen den Pressenetagen bei geöffneter Presse werkstückgerecht und/oder bedarfsgerecht einzustellen. Der Abstand zwischen den Pressenetagen ist somit variabel und kann beispielsweise über eine Steuerung der Presse eingestellt werden. Bevorzugt werden die Pressenetage nur so weit geöffnet, dass eine Zuführung bzw. Abführung der Werkstücke oder des Werkstücks möglich ist, so dass Taktzeit eingespart werden kann.

Bevorzugt ist mindestens eine der Förderbandeinrichtungen als eine Wickelförderbandeinrichtung ausgebildet ist. Insbesondere kann die obere oder untere Pressenförderbandeinrichtung, die Zuführförderbandeinrichtung, die Abführförderbandeinrichtung und/oder die Ablöseförderbandeinrichtung als Wickelförderbandeinrichtung realisiert sein. Bei einer bevorzugten Ausgestaltung ist bei mindestens einer Wickelförderbandeinrichtung das Förderband bei geschlossener Presse in dem Stapel angeordnet und/oder zwischen der Andrückeinrichtung und der Anschlageinrichtung positioniert. Bei dieser Ausgestaltung kommt der Vorteil der Ausbildung der Förderbandeinrichtung als Wickelförderbandeinrichtung besonders stark hervor, da das Förderband beim Pressvorgang nur einlagig mit gepresst wird.

Die Förderbandeinrichtung als Wickelförderbandeinrichtung weist mindestens oder genau eine erste Förderrolle und eine zweite Förderrolle zum Fördern des Förderbands auf. Das Förderband ist auf den Förderrollen optional einlagig oder mehrlagig wickelbar, insbesondere aufwickelbar und/oder abwickelbar, insbesondere aufgewickelt. Im Betrieb wird das Förderband in einer Förderrichtung von der ersten Förderrolle abgewickelt und auf die zweite Förderrolle aufgewickelt und/oder in einer Gegenförderrichtung von der zweiten Förderrolle auf die erste Förderrolle aufgewickelt. Insbesondere ist zwischen der ersten und der zweiten Förderrolle ein aktiver Förderbandabschnitt des Förderbands ausgebildet, wobei der aktive Förderbandabschnitt des Förderbands der Wickelförderbandeinrichtung nur einlagig vorliegt.

Der Weiterbildung liegt die Überlegung zugrunde, dass bei der Verwendung von umlaufenden Förderbändern stets ein größerer Bauraum für die Förderbandeinrichtung benötigt wird. Durch die Verwendung der Wickelförderbandeinrichtung wird das Förderband, insbesondere mit dem aktiven Förderbandabschnitt, nur einlagig in der Wickelförderbandeinrichtung geführt.

Bei einer möglichen Ausgestaltung weist die Wickelförderbandeinrichtung einen Fremdenergieantrieb mit externer Energieversorgung für eine der Förderrollen auf. Unter einem Fremdenergieantrieb mit externer Energieversorgung wird insbesondere ein elektromechanischer Antrieb, ein hydraulischer Antrieb oder ein pneumatischer Antrieb verstanden. Die andere Förderrolle weist dagegen einen mechanischen Rückholantrieb mit einem mechanischen Energiespeicher auf. Beispielsweise kann der mechanischen Energiespeicher als ein Federenergiespeicher ausgebildet sein. Bei einem Abrollen des Förderbands von dieser Förderrolle wird der mechanischen Energiespeicher, insbesondere der Federenergiespeicher, geladen. Für das Aufrollen des Förderbands wird die mechanische Energie aus dem mechanischen Energiespeicher freigesetzt. Bei dieser Ausgestaltung können die Fremdenergieanbindung und die Steuerung der Wickelförderbandeinrichtung vereinfacht werden.

Alternativ hierzu weist die Wickelförderbandeinrichtung einen gemeinsamen Fremdenergieantrieb mit externer Energieversorgung für beide Förderrollen auf. Insbesondere treibt der Fremdenergieantrieb beide Förderrollen unabhängig voneinander an oder treibt eine der Förderrollen an, wobei die andere Förderrolle getriebetechnisch angebunden ist.

Bei einer weiteren Alternative weist die Wickelförderbandeinrichtung für jede Förderrolle einen eigenen Fremdenergieantrieb mit externer Energieversorgung auf.

Diese Alternative ist besonders vorteilhaft, wenn gesteuert zum Beispiel die Spannung des Förderbands geändert werden soll.

Ferner kann vorgesehen sein, dass die Länge des Förderbands länger als die dreifache Länge, insbesondere länger als die vierfache Länge des aktiven Förderbandabschnitts ist. Damit kann die Belastung des Förderbands durch die Anlage an das Werkstück über eine größere Förderbandlänge im Vergleich zu umlaufenden Förderbändern verteilt werden. Bei weiteren Alternativen kann das Förderband auch so lange ausgebildet sein, dass dieses als Einmalband verwendet wird, welches nur in einer Transportrichtung durch die Wickelförderbandeinrichtung läuft.

Bei einer bevorzugten Weiterbildung bilden die Förderrollen und das Förderband ein Wechselset, wobei das Wechselset als eine zusammenhängende Baugruppe austauschbar ist. Insbesondere ist das Wechselset in einer Wechselkassette angeordnet, wobei die Wechselkassette als eine selbsthaltende Baugruppe ausgebildet ist. Das Wechselset oder die Wechselkassette kann in einfacher Weise, insbesondere werkzeugfrei, in der Presse ausgetauscht werden. Bei einem Verschleiß oder bei einem Versagen von dem Förderband kann somit das Wechselset oder die Wechselkassette mit dem defekten oder abgenutzten Förderband ausgetauscht werden, ohne dass lange Rüstzeiten zu einem temporären Ausfall der gesamten Presse führen.

Bei einer bevorzugten Ausgestaltung ist die mindestens eine Förderbandeinrichtung als eine Ablöseförderbandeinrichtung zur Anlage an das Werkstück, insbesondere an einer Oberseite des Werkstücks, ausgebildet. Insbesondere liegt das Förderband der Ablöseförderbandeinrichtung beim Pressvorgang an dem Werkstück an. Durch die Ablöseförderbandeinrichtung wird vermieden, dass das Werkstück an weiteren Komponenten der Presse, insbesondere mit der Oberseite, anhaften kann, da das Förderband eine Zwischenlage zwischen dem Werkstück und der weiteren Komponente bildet. Beispielsweise kann die weitere Komponente als die Anschlageinrichtung, als die oder eine weitere Pressenetage und/oder als eine Temperierplatte, insbesondere der mindestens einen oder weiteren Pressenetage, ausgebildet sein. Durch die Verwendung des Förderbands als Zwischenschicht wird somit der Materialfluss in der Presse verbessert.

Die Ablöseförderbandeinrichtung hat zudem die Funktion, das Förderband nach dem Pressvorgang von dem Werkstück abzulösen. Dies ist besonders vorteilhaft, da manche Werkstücke aufgrund von Ausgasungen, Ausflüssen, Klebemitteln bzw. klebenden Lagen und/oder aufgrund des Pressvorgangs und/oder aufgrund der Temperierung an dem Förderband anhaften und/oder mit diesem verkleben können. Insbesondere für den Fall, dass das Werkstück ein Klebemittel oder Lagen aufweist, die aufgrund des Pressvorgangs und/oder der Temperierung klebend wirken, kann das Ablösen des Förderbands von dem Werkstück nach dem Pressvorgang zu einer Störung des Materialflusses und/oder zu einer Beschädigung des Werkstücks führen. Durch die Ablöseförderbandeinrichtung wird sichergestellt, dass das Förderband sicher von dem Werkstück gelöst werden kann. Die Ablöseförderbandeinrichtung ist vorzugsweise ausgebildet, mit dem Förderband an einer Oberseite des Werkstücks anzuliegen. Bei alternativen oder ergänzenden Ausgestaltungen kann die Ablöseförderbandeinrichtung ausgebildet sein, mit dem Förderband an einer Unterseite des Werkstücks anzuliegen. Die Anlage an der Oberseite ist bevorzugt, da die Pressenöffnung Spielraum für ein "lockeres Förderband" gibt. Jedoch ist auch die Anlage an der Unterseite des Werkstücks möglich, wobei z.B. das Förderband "unter dem Werkstück doppellagig liegt, bis es komplett abgezogen ist.

Die Ablöseförderbandeinrichtung ist in einem Hauptablösemodus betreibbar. Es kann vorgesehen sein, dass die Ablöseförderbandeinrichtung ausschließlich in dem Hauptablösemodus betreibbar ist. Alternativ kann die Ablöseförderbandeinrichtung zwischen verschiedenen Modi wechseln.

In dem Hauptablösemodus befindet sich das Förderband in einem Hauptablösezustand, wobei dieses einen Umschlagbereich aufweist oder ausbildet. Der Umschlagbereich wird durch einen Abschnitt des Förderbands gebildet. In dem Umschlagbereich ist das Förderband umgeschlagen, so dass dieses eine Richtungsänderung durchführt. Insbesondere wird durch den Umschlagbereich eine Hauptablöselinie gebildet, wobei es bestimmungsgemäß vorgesehen ist, dass das Förderband an der Hauptablöselinie von dem Werkstück abgezogen wird. Die Hauptablöselinie kann geradlinig und/oder senkrecht zur Transportrichtung des Förderbands ausgebildet sein, alternativ kann diese gekrümmt auf dem Werkstück verlaufen. Vor dem Umschlagbereich ist ein Haftabschnitt des Förderbands auf dem Werkstück, insbesondere haftend angeordnet, nach dem Umschlagbereich ist ein Freiabschnitt des Förderbands vorgesehen, welcher bevorzugt gewinkelt, insbesondere in Gegenrichtung, im Speziellen in nahezu parallel zu dem Haftabschnitt verläuft.

Der Umschlagbereich wird von dem Förderband selbst gebildet und/oder ist umlenkkörperfrei ausgebildet. Insbesondere ist der Umschlagbereich als eine Falte quer zur Transportrichtung des Förderbands ausgebildet, wobei bevorzugt das Förderband in dem Umschlagbereich in der Höhenrichtung der Presse doppelt verläuft. Der Umschlagbereich ist insbesondere als ein leerer Umschlagbereich ausgebildet, wobei das von dem Umschlagbereich umschlossene Volumen leer ist.

Die Ablöseförderbandeinrichtung ist ausgebildet, das Förderband bei einer Relativbewegung zwischen dem Freiabschnitt des Förderbands und dem Werkstück abzuziehen. Insbesondere wird während der Relativbewegung das Förderband über den Umschlagbereich von dem Werkstück abgezogen. Insbesondere wird durch die Relativbewegung der Freiabschnitt in einer Abziehrichtung, wobei die Abziehrichtung durch eine Wanderung der Hauptablöselinie auf dem Werkstück beim Ablösen definiert ist, abgezogen, um das Förderband von dem Werkstück abzulösen.

Es ist dabei eine weiterführende Überlegung, dass durch den Umschlagbereich ein Bereich auf dem Werkstück gebildet wird, an dem das Förderband mit einem Ablösewinkel, wobei der Ablösewinkel zwischen dem Werkstück und dem Förderband in Transportrichtung betrachtet wird, abgezogen wird. Je größer der Ablösewinkel ist, desto besser kann das Förderband von dem Werkstück abgezogen werden. Dadurch, dass der Umschlagbereich selbst gebildet und/oder umlenkkörperfrei ist, kann sich die Hauptablöselinie frei einstellen, sodass der Ablösevorgang besonders schonend für das Werkstück durchgeführt werden kann. Der Ablösewinkel kann jedoch auch durch den Abstand zwischen dem Werkstück und der Ablöseförderbandeinrichtung beeinflusst werden, so dass die Presse beim Ablösevorgang durch die Ablöseförderbandeinrichtung den richtigen Abstand frei einstellen und halten kann und sogar ggf. nachführen kann.

Bei einer bevorzugten Ausgestaltung der Erfindung ist zwischen der ersten und der zweiten Förderrolle ein aktiver Förderbandabschnitt des Förderbands ausgebildet. Der Umschlagbereich wird durch den aktiven Förderbandabschnitt gebildet. In dem Hauptablösezustand ist der aktive Förderbandabschnitt länger als der kürzeste Förderbandweg zwischen den Förderrollen. Damit ist das Förderband in dem Hauptablösezustand überlang zu dem kürzesten Förderbandweg zwischen den Förderrollen ausgebildet. Ohne weitere Fixierung, zum Beispiel durch das Werkstück, würde der aktive Förderbandabschnitt schlaff ausgebildet sein.

Besonders bevorzugt ist der Umschlagbereich in Transportrichtung des Förderbands in einem Bereich außerhalb der Förderbandrollen der Ablöseförderbandeinrichtung angeordnet. Insbesondere ist der Umschlagbereich in Transportrichtung vorlaufend zu den beiden Förderbandrollen, insbesondere zu einem beliebigen Führungskörper der Ablöseförderbandeinrichtung zur Führung des Förderbands angeordnet.

Es ist bevorzugt, dass ein Umlenkwinkel des Förderbands für den Umschlagbereich größer als 90°, insbesondere größer als 120° und im speziellen größer als 150° ausgebildet ist. Der Umlenkwinkel wird zwischen dem Haftabschnitt und dem Freiabschnitt in Transportrichtung des Förderbands gemessen. Alternativ oder ergänzend ist der Umlenkwinkel und/oder ein Umlenkradius durch eine Steifigkeit des Förderbands in dem Umschlagbereich festgelegt. Durch die Nutzung eines großen Umlenkwinkels, insbesondere eines maximalen, durch die Steifigkeit des Förderbands begrenzten Umlenkwinkels und/oder eines minimalen Umlenkradius, wird der Ablösewinkel zwischen dem Förderband und dem Werkstück maximiert und das Ablöseverhalten und damit der Materialfluss verbessert.

Prinzipiell kann das Förderband der Ablöseförderbandeinrichtung durch die Anschlageinrichtung oder die Andrückeinrichtung gegengestützt werden, so dass die Anschlageinrichtung bzw. die Andrückeinrichtung mittelbar oder unmittelbar einen Anschlag oder eine Anlage für das Förderband bildet.

Bevorzugt ist die Ablöseförderbandeinrichtung an der Unterseite einer weiteren Pressenetage angeordnet. Auf diese Weise ist eine Mehretagenpresse bildbar, wobei auf jeder Pressenetage ein Werkstück angeordnet werden kann und wobei für jede Pressenetage für die Oberseite des Werkstücks eine derartige Ablöseförderbandeinrichtung angeordnet ist. Durch diese Weiterbildung können eine Mehrzahl von Werkstücken parallel bearbeitet werden, wobei für jedes der Werkstücke eine derartige Ablöseförderbandeinrichtung angeordnet ist, um jedes der Werkstücke verbessert abzulösen und dadurch dem Materialfluss zu verbessern.

Insbesondere ist die Ablöseförderbandeinrichtung, insbesondere umfassend die Förderrollen, mit der Pressenetage verbunden, so dass die Ablöseförderbandeinrichtung mit der Pressenetage beim Öffnen und beim Schließen mitgeführt wird.

Bei einer möglichen Ausgestaltung ist die Ablöseförderbandeinrichtung in einem Entlademodus betreibbar oder wird in dem Entlademodus betrieben, wobei sich das Förderband in einem Entladezustand befindet. In dem Entlademodus wird in der Transportrichtung von der hinteren Förderrolle das Förderband freigegeben oder aktiv Förderband ausgegeben, so dass das Werkstück in Transportrichtung entladen werden kann. Das Förderband befindet sich in einem Entladezustand, wobei das Förderband von dem Werkstück nicht abgelöst wird. Insbesondere wird das Förderband von der zweiten Förderrolle zugkraftfrei geführt. Der Entlademodus erlaubt es, das Werkstück aus der Presse und/oder von der Ablöseförderbandeinrichtung auszufahren, jedoch ohne das Förderband von dem Werkstück abzulösen oder abzuziehen. Der Entlademodus erlaubt es insbesondere, das Werkstück zu positionieren, wobei das Ablösen des Förderbands von dem Werkstück durch den Hauptablösemodus und/oder den nachfolgenden Nebenablösemodus durchgeführt wird. Auf diese Weise ist das Ablösen von dem Förderband von dem Werkstück nicht mit einem Verfahren oder Transportieren des Werkstücks zwangsverbunden und kann kontrolliert durchgeführt werden. Alternativ kann die Ablöseförderbandeinrichtung als Pressenförderbandeinrichtung arbeiten.

Bei einer möglichen Weiterbildung der Erfindung weist die Ablöseförderbandeinrichtung einen Ablöseumlenkkörper auf. Zur Nutzung des Ablöseumlenkkörpers ist die Ablöseförderbandeinrichtung in einem Nebenablösemodus betreibbar. In dem Nebenablösemodus befindet sich das Förderband in einem Nebenablösezustand und weist einen Umlenkbereich auf oder bildet einen Umlenkbereich, wobei das Förderband in dem Umlenkbereich, insbesondere eng und/oder straff, um den Ablöseumlenkkörper geführt wird. Der Ablöseumlenkkörper bildet eine Nebenablöselinie aus, um das Förderband von dem Werkstück abzulösen. Der Ablöseumlenkkörper kann als eine Kante oder als eine Umlenkrolle ausgebildet sein. Insbesondere ist ein Umlenkradius des Förderbands in dem Umlenkbereich kleiner als ein Radius der in Transportrichtung hinteren Förderrolle ausgebildet. Durch den Ablöseumlenkkörper wird insbesondere eine Messerkante gebildet, um das Ablösen des Förderbands von dem Werkstück und damit dem Materialfluss zu verbessern. Es ist eine Überlegung der Weiterbildung, dass das Ablösen von dem Förderband von dem Werkstück prinzipiell durch den Hauptablösemodus durchgeführt werden kann. Insbesondere wenn das Werkstück in Transportrichtung vollständig hinter der in Transportrichtung hinteren Förderrolle angeordnet ist, kann das Werkstück nicht mehr durch die Ablöseförderbandeinrichtung festgehalten, insbesondere in Höhenrichtung der Presse geklemmt werden. Damit besteht bei leichten Werkstücken die Gefahr, dass das Werkstück durch den Hauptablösemodus durch das Abziehen des Förderbands von dem Werkstück in eine undefinierte Lage gebracht wird. Durch die Integration des zusätzlichen Ablöseumlenkkörpers kann das Förderband von dem Werkstück abgezogen werden, ohne das Werkstück in der Lage zu verändern. Alternativ zu dem Ablöseumlenkkörper kann das Abziehen des Förderbands von dem Werkstück außerhalb von der Ablöseförderbandeinrichtung durch die zweite Förderrolle umgesetzt werden. Auch in dem Nebenablösemodus kann der Abstand zwischen dem Werkstück und der Ablöseförderbandeinrichtung durch die Presse frei eingestellt werden.

Bei einer Weiterbildung wird vorgeschlagen, dass die Ablöseförderbandeinrichtung als eine Wickelförderbandeinrichtung ausgebildet ist, wie diese zuvor beschreiben wurde. Insbesondere bei der Ausbildung der Ablöseförderbandeinrichtung als Wickelförderbandeinrichtung ergibt sich der Vorteil, dass der aktive Förderbandabschnitt besonders einfach eingestellt werden kann. Insbesondere erlaubt die Wickelförderbandeinrichtung als Ablöseförderbandeinrichtung es besonders einfach, ausreichend Förderband für den Umschlagbereich zur Verfügung zu stellen, indem das Förderband von einer Förderrolle oder beiden Förderrollen abgewickelt wird und dadurch der aktive Förderbandabschnitt in der Länge frei eingestellt werden kann.

Die Presse kann so ausgebildet sein und/oder beim Betreiben der Presse kann vorgesehen sein, dass das Förderband von dem Werkstück nach dem Pressvorgang durch die Ablöseförderbandeinrichtung abgezogen wird, wobei die Ablöseförderbandeinrichtung in dem Hauptablösemodus betrieben wird, wie diese zuvor beschrieben wurde. Durch das Abziehen des Förderbands von dem Werkstück, wird das Förderband von dem Werkstück abgelöst. Dabei kann vorgesehen sein, dass das Förderband von dem Werkstück vollständig abgelöst wird. Alternativ hierzu kann zunächst insbesondere ein Großteil des anfänglichen Haftabschnitts von dem Werkstück in dem Hauptablösemodus abgelöst werden und nachfolgend ein anhaftender Restabschnitt in dem Nebenablösemodus abgelöst werden.

Es ist möglich, dass das Werkstück durch die Presse geklemmt wird, während das Förderband von dem Werkstück abgelöst wird. Durch das Klemmen kann das Werkstück fixiert werden, so dass es nicht beim Ablösevorgang verrutschen kann.

Dadurch, dass der Umschlagbereich in Transportrichtung vorlaufend ist, wird dieser nicht mitgepresst, so dass das Förderband auch bei klemmender Presse abgezogen werden kann. Das Abziehen erfolgt insbesondere dadurch, dass der Freiabschnitt des Förderbands von der Ablöseförderbandeinrichtung, insbesondere der zweiten Förderrolle, eingezogen wird.

Der Ablösevorgang kann auch unter Klemmung kontinuierlich erfolgen, so dass das Werkstück in Transportrichtung bewegt und zeitgleich das Förderband von dem Werkstück abgelöst wird. Alternativ hierzu kann die Ablöseförderbandeinrichtung abwechselnd den Hauptablösemodus und den Entlademodus einnehmen, wobei in dem Entlademodus die Klemmung aufgehoben oder zumindest reduziert wird. Gerade bei dieser Alternative ergeben sich besondere Vorteile, wenn die Presse die Abstände zwischen den Pressenetagen parallel und frei einstellen kann. Die Presse kann in dem Hauptablösemodus zusammenfahren, um das Werkstück zu klemmen, und in dem Entlademodus auseinanderfahren, um das Werkstück vereinfacht transportieren zu können.

Wenn das Werkstück so weit aus der Presse ausgefahren ist, dass keine Klemmung durch die Presse, insbesondere über die Temperierplatten, mehr möglich ist, ist es bevorzugt, dass ein verbleibender, anhaftender Restabschnitt des Förderbands auf dem Werkstück in den Nebenablösemodus abgezogen wird, um das Förderband von dem Werkstück vollständig abzulösen. In den Nebenablösemodus kann das Förderband von dem Werkstück abgelöst werden, wobei ein Verrutschen des Werkstücks dadurch verhindert wird, dass sich der Schwerpunkt des Werkstücks schon deutlich über die Ablösekante hinausbewegt hat.

Ein weiterer Gegenstand der Erfindung wird durch ein Verfahren zum Betreiben der Presse gebildet, wobei das Zugmittel durch die Zugmittelführungseinrichtung in mindestens einem Betriebszustand mit einer Zugkraft beaufschlagt wird.
- Figur 1: eine schematische Darstellung einer Presse als ein Ausführungsbeispiel der Erfindung;
- Figur 2: eine schematische Darstellung des Materialtransports in der Presse der Figur 1 als ein Ausführungsbeispiel der Erfindung;
- Figur 3: eine schematische Darstellung der Presse der vorhergehenden Figuren mit einer abgewandelten Konfiguration der Förderbandeinrichtungen mit Details zu der Verfahranordnung als ein Ausführungsbeispiel der Erfindung;
- Figur 4: eine schematische Darstellung der möglichen Ausgestaltung der Förderbandeinrichtungen in den vorhergehenden Figuren;
- Figuren 5a, b, c, d: eine schematische Darstellung eines Ablösevorgangs in der Presse der vorhergehenden Ansprüche mit einer abgewandelten Konfiguration oder einer abgewandelten Betriebsweise der Förderbandeinrichtungen;
- Figur 6: eine schematische Darstellung der Presse der vorhergehenden Figuren mit einer möglichen Ausgestaltung und Betriebsweise von mindestens einer der Zugmitteleinrichtungen;
- Figur 7: eine schematische Darstellung der Presse der vorhergehenden Figuren mit einer möglichen, alternativen Ausgestaltung und Betriebsweise von mindestens einer der Zugmitteleinrichtungen;
- Figur 8: eine schematische Darstellung der Zugmitteleinrichtung für die Presse der vorhergehenden Figuren;
- Figuren 9a, b, c, d: unterschiedliche Varianten zur Ausgestaltung und Betriebsweise der Zugmitteleinrichtungen in der Presse der vorhergehenden Figuren;
- Figur 10: eine schematische, dreidimensionale Darstellung einer möglichen konstruktiven Ausgestaltung der Presse der vorhergehenden Figuren;
- Figur 11: eine schematische, dreidimensionale Darstellung der Presse in der Figur 10 in anderer Ansicht;
- Figur 12: eine schematische, dreidimensionale Darstellung der Zugmitteleinrichtung in einer anderen konstruktiven Ausgestaltung.
Einander entsprechende oder gleiche Teile sind in den Figuren jeweils mit den gleichen Bezugszeichen versehen.

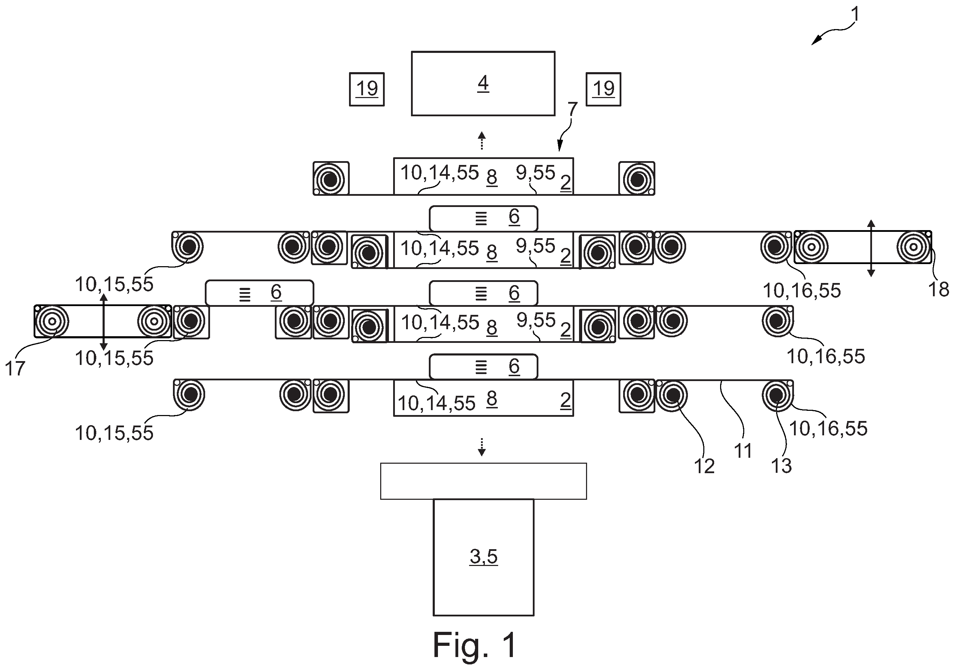

Die Figur 1 zeigt in einer schematischen Darstellung eine Seitenansicht von einer Presse 1 als ein Ausführungsbeispiel der Erfindung. Die Presse 1 ist als eine Mehretagenpresse ausgebildet und weist in diesem Ausführungsbeispiel vier Pressenetagen 2 auf, wobei die unterste und die oberste Pressentage 2 nur teilweise dargestellt sind. Insbesondere können auch mehr Pressenetagen 2 vorgesehen sein. Die Pressenetagen 2 sind zwischen einer Andrückeinrichtung 3 und einer Anschlageinrichtung 4 angeordnet. Die Andrückeinrichtung 3 kann beispielsweise einen Stempel 5 aufweisen, welcher zur Beaufschlagung einer Andrückkraft, insbesondere Pressenkraft ausgefahren werden kann. Die Anschlageinrichtung 4 ist stationär angeordnet. Die Pressenetagen 2 sind in Höhenrichtung der Presse 1 und/oder in Druckrichtung der Andrückeinrichtung 3 übereinander, insbesondere überlappend und/oder deckungsgleich, angeordnet. Die Presse 1 weist eine Verfahranordnung 19 auf, welche bei diesem Ausführungsbeispiel ausgebildet ist, die Pressenetagen 2 derart zu manipulieren, insbesondere zu verfahren, dass insbesondere offene Abstände zwischen den Pressenetage beim, insbesondere während, Öffnen und/oder Schließen der Presse 1 parallel und/oder zeitgleich verändert werden. Bei anderen Ausführungsbeispielen können andere Verfahranordnungen zum Einsatz kommen.

Auf den Pressenetagen 2 ist jeweils ein Werkstück 6 angeordnet, wobei die Pressenetagen 2 optional mit den Werkstücken 6 beim Schließen der Presse 1 einen Stapel 7 bilden. Bei einem Schließen der Presse 1 durch Verschiebung des Stempels 5 in Richtung der Anschlageinrichtung 4 wird der Stapel 7 und damit die Werkstücke 6 mit einer Pressenkraft beaufschlagt. Wird der Stempel 5 in Gegenrichtung gefahren, so öffnet sich die Presse 1 und die Werkstücke 6 können abtransportiert bzw. antransportiert werden. In dem geöffneten Zustand sind die Pressenetagen 2 mit den Werkstücken 6 voneinander vereinzelt oder beabstandet, in dem geschlossenen Zustand liegen diese aneinander an.

Zur Beaufschlagung des Werkstücks 6 mit einer Temperatur weist jede Pressenetage 2 eine Temperierplatte 8 auf, welche in diesem Ausführungsbeispiel als eine Heizplatte ausgebildet ist und welche im geschlossenen Zustand der Presse 1 mit den Werkstücken 6 in Temperaturaustausch stehen. In dem geschlossenen Zustand der Presse 1 wird die Andrückkraft über die Temperierplatten 8 in dem Stapel 7 übertragen. Die Temperierplatte 8, ausgebildet als Heizplatte, ist beispielsweise ausgebildet, Temperaturen über 80 °C oder über 150 °C bereitzustellen. Alternativ hierzu kann die Presse 1 als eine Kühlpresse ausgebildet sein, wobei die Temperierplatte 8 als eine Kühlplatte ausgebildet ist, welche aktiv gekühlt wird. Die Presse 1 kann auch als eine Heiz-Kühlpresse realisiert sein, wobei die Temperierplatten 8 als Heiz- und/oder Kühlplatten ausgebildet sind. Die Temperierplatte 8 ist von der Fläche so ausgebildet, dass diese größer ist als die Anlagefläche des Werkstücks 6.

Die Werkstücke 8 sind als Flächenbauteile, oder Bauteile die auf einer Fläche gepresst werden sollen, ausgebildet und können zum Beispiel als Leiterplatten, Solarzellen, Verbundglas, Vorprodukte zur Batteriefertigung für Traktionsbatterien in der Automobilindustrie mit Elektroden etc. ausgebildet sein.

Zur Automatisierung der Presse 1 weist diese eine Mehrzahl von Förderbandeinrichtungen 10 auf. Die Förderbandeinrichtungen 10 weisen jeweils ein Förderband 11 und eine erste Förderrolle 12 und eine zweite Förderrolle 13 auf. Das Förderband 11 dient zur Anlage an das Werkstück 6, je nach Förderbandeinrichtung 10 kann das Werkstück 6 auf dem Förderband 11 aufliegend anliegen oder mit der Oberseite an dem Förderband 11 anliegen. In dem Ausführungsbeispiel in der Figur 1 sind die folgenden Förderbandeinrichtungen 10 gezeigt:
In dem Stapel 7 und somit zwischen der Andrückeinrichtung 3 und der Anschlageinrichtung 4 sind die Förderbandeinrichtungen 10 als Pressenförderbandeinrichtungen 14 ausgebildet, welche die Pressenetagen 2 mit dem Werkstück beladen und entladen. Die Förderbänder 11 der Pressenförderbandeinrichtungen 14 befinden sich bei geschlossener Presse 1 zwischen den Werkstücken 6 und/oder den Temperierplatten 8 und/oder den Pressenetagen 2 und werden mit der Andrückkraft der Andrückeinrichtung 3 beaufschlagt. In der Figur 1 ist das Förderband 11 der Pressenförderbandeinrichtung 14 auf einer Oberseite der Pressenetage 2 angeordnet, insbesondere der Art, dass es das Werkstück 6 von der Temperierplatte 8 trennt. Das Werkstück 6 liegt für einen Transport mit seiner Unterseite auf dem Förderband 11 der Pressenförderbandeinrichtung 14 auf.

Optional ergänzend sind Förderbänder 11 von weiteren Pressenförderbandeinrichtungen 14 auf einer Unterseite der Pressenetage 2 oder auf der Unterseite der Anschlageinrichtung 4 angeordnet, insbesondere der Art, dass das Werkstück 6 von der Temperierplatte 8 der Pressenetage 2 getrennt ist, welche als unmittelbarer Nachbar zu dem Werkstück 6 angeordnet ist. Das Werkstück 6 liegt für einen Transport mit seiner Oberseite an dem Förderband 11 der weiteren Pressenförderbandeinrichtung 14 an. Diese weiteren Pressenförderbandeinrichtung 14 können auch als Ablöseförderbandeinrichtungen 9 ausgebildet sein, die in den nachfolgenden Figuren erläutert werden.

Ein Temperaturausgleich und/oder ein Wärmeübertrag findet zwischen dem Werkstück 6 und der Temperierplatte 8 durch einen Temperaturfluss durch das jeweilige Förderband 11 der Pressenförderbandeinrichtung 14 bzw. der weiteren Pressenförderbandeinrichtung 14 bzw. der Ablöseförderbandeinrichtung 9 statt.

In Materialflussrichtung vor dem Stapel 7 und/oder außerhalb von dem Stapel 7 sind Fördereinrichtungen 10 angeordnet, welche als Zuführförderbandeinrichtungen 15 ausgebildet sind. Die Zuführförderbandeinrichtungen 15 sind ausgebildet, die Werkstücke 6 in den Stapel 7, insbesondere der Pressenetage 2 und bei diesem Ausführungsbeispiel zu den Pressenförderbandeinrichtungen 14 zuzuführen.

In Materialflussrichtung hinter dem Stapel 7 und/oder außerhalb von dem Stapel 7 sind Fördereinrichtungen 10 angeordnet, welche als Abführförderbandeinrichtungen 16 ausgebildet sind. Die Abführförderbandeinrichtungen 16 sind ausgebildet, die Werkstücke 6 aus dem Stapel 7, insbesondere aus der Pressenetage 2 und bei diesem Ausführungsbeispiel von den Pressenförderbandeinrichtungen 14 abzuführen.

Die Presse 1 weist eine Beladeeinrichtung 17 zum Beladen der Zuführförderbandeinrichtungen 15 mit den Werkstücken 6 auf. Die Beladeeinrichtung 17 ist höhenverfahrbar, um die Zuführförderbandeinrichtungen 15 einzeln oder in Gruppen mit dem Werkstück 6 zu beladen. Alternativ kann die Beladeeinrichtung 17 auch als ein Beladeroboter ausgebildet sein oder alle Zuführförderbandeinrichtungen 15 parallel und/oder zeitgleich beladen.

Die Presse 1 weist eine Entladeeinrichtung 18 zum Entladen der Abführförderbandeinrichtung in 16 auf. Die Entladeeinrichtung 18 ist höhenverfahrbar, um die Abführförderbandeinrichtungen 16 einzeln oder in Gruppen mit dem Werkstück 6 zu beladen. Alternativ kann die Entladeeinrichtung 18 auch als ein Beladeroboter ausgebildet sein oder alle Abführförderbandeinrichtungen 15 parallel und/oder zeitgleich beladen.

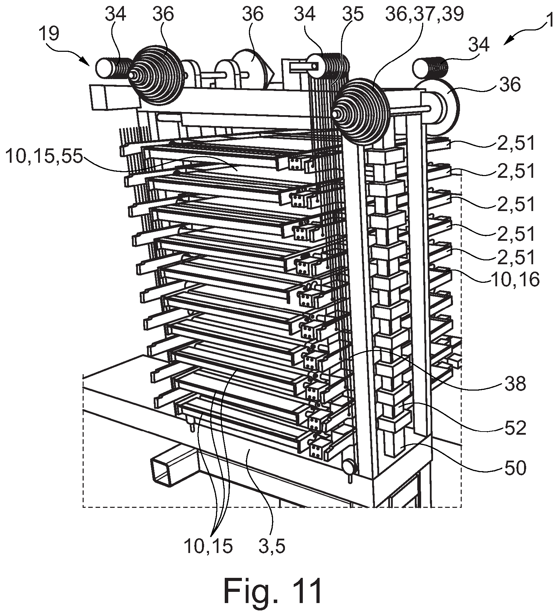

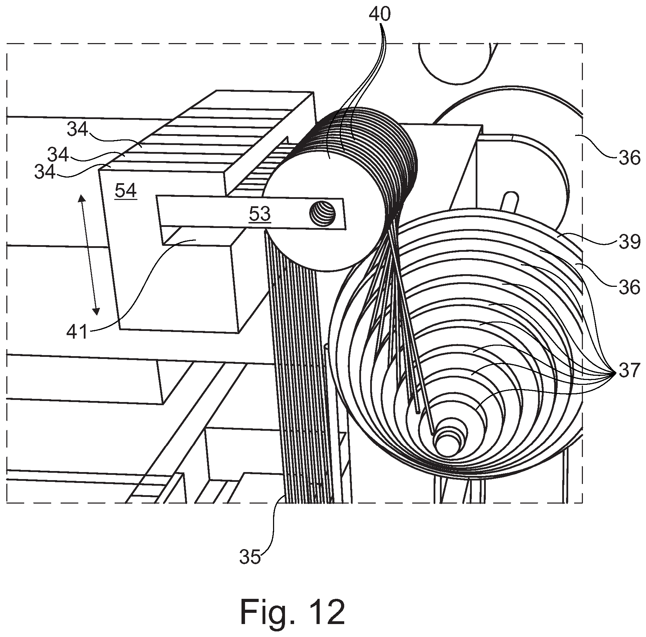

Die Pressenetagen 2 können einen Grundkörper 51 (Figur 11, 12), wie zum Beispiel einen Tragrahmen oder dergleichen, aufweisen, in dem die Temperierplatte 8 angeordnet ist. Die Förderbandeinrichtungen 10, welche einer Pressenetage 2 zugeordnet sind, sind mit der Pressenetage 2 fest verbunden und/oder werden durch diese getragen. Das bedeutet, dass bei einer Höhenänderung der Pressenetage 2 die Förderbandeinrichtungen 10 mitgefahren werden. Bei einer "Vollausstattung" der Pressenetage 2 weist diese somit zwei der Pressenförderbandeinrichtungen 14, wobei eine der Pressenförderbandeinrichtungen 14 als Ablöseförderbandeinrichtung 9 ausgebildet sein kann, sowie eine Zuführförderbandeinrichtung 15 und eine Abführförderbandeinrichtung 16 auf. In Abhängigkeit der Ausgestaltung können die Pressenetage 2 jeweils nur eine Teilmenge der Förderbandeinrichtungen 10 aufweisen.

Funktional betrachtet werden die Pressenetagen 2 mit den dazwischen angeordneten Werkstücken 6 bei einem Schließen der Presse 1 in den Stapel 7 überführt, wobei die Andrückkraft und/oder die Pressenkraft über den Stapel 7 geführt oder übertragen wird, und bei einem Öffnen der Presse 1 vereinzelt, so dass die Werkstücke 6 den Pressenetagen 2 für den Pressvorgang zugeführt und nach dem Pressvorgang abgeführt werden können.

Für die Bewegung der Pressenetagen 2 weist die Presse 1 eine Verfahranordnung 19 zum Verfahren der Pressenetagen 2 in Richtung der Anschlageinrichtung 4 auf, wobei die Verfahranordnung 19 bei diesem Ausführungsbeispiel ausgebildet sein kann, die Abstände zwischen den Pressenetagen 2 beim oder während dem Öffnen und/oder beim Schließen der Presse 1 parallel und/oder zeitgleich zu verändern.

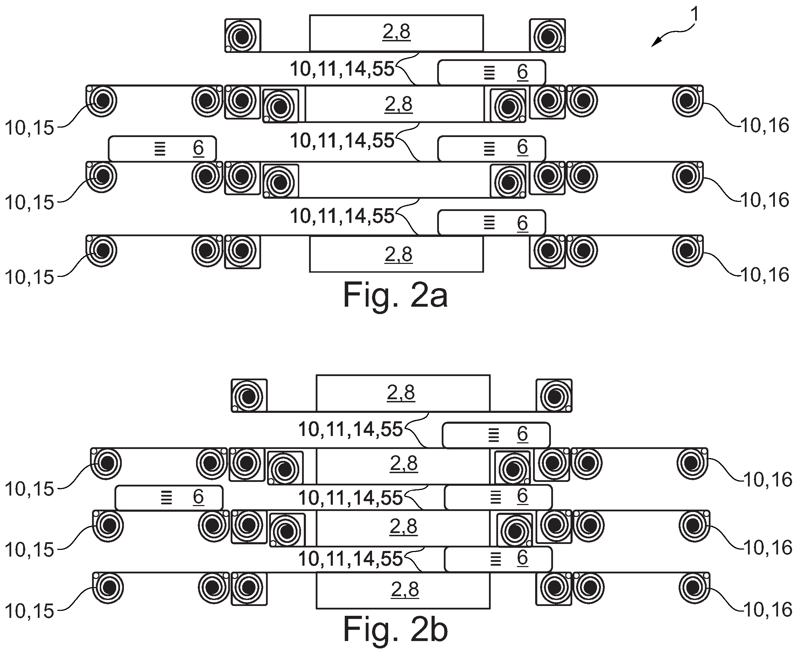

Die Figur 2 a, b zeigen die Presse 1 der Figur 1 teilweise, wobei Figur 2 a eine Variante von einem Abtransport der Werkstücke 6 zeigt, wobei die Pressenförderbandeinrichtungen 14 von der Oberseite der Werkstücke 6 beabstandet sind. Diese Variante kann vorteilhaft eingesetzt werden, wenn die Werkstücke 6 nicht oder nur wenig an den Förderbändern 11 dieser Pressenförderbandeinrichtung 14 anhaften. In der Figur 2 b wird eine Variante von einem Abtransport der Werkstücke 6 gezeigt, wobei die Pressenförderbandeinrichtungen 14 kontaktierend auf der Oberseite der Werkstücke 6 anliegen. Bei dieser Variante können diese Pressenförderbandeinrichtungen 14 bei dem Abtransport der Werkstücke 6 aus der Presse 1 aktiv unterstützen. Bei dieser Variante wird die Presse 1 nur so weit geöffnet, dass die Werkstücke 6 herausgefahren können, jedoch noch reibschlüssig und/oder stoffschlüssig mit der Oberseite an den oberen Pressenförderbandeinrichtungen 14 anliegen.

Aus den Figuren 1, Figur 2 a, b ist zu entnehmen, dass die unteren Pressenförderbandeinrichtungen 14 in der Erstreckung in Transportrichtung länger ausgebildet sind als die oberen Pressenförderbandeinrichtungen 14. Insbesondere stehen die unteren Pressenförderbandeinrichtungen 14 beidseitig in Transportrichtung über die oberen Pressenförderbandeinrichtungen 14 über. Insbesondere können die oberen Pressenförderbandeinrichtungen 14 als die Ablöseförderbandeinrichtungen 9 ausgebildet sein, welches sich dann in einem Entlademodus befinden. Die Förderrollen 12, 13 der verschiedenen Fördereinrichtungen 10 greifen klammerartig ineinander. So umgreift beispielsweise die obere Pressenförderbandeinrichtung 14 und/oder die Ablöseförderbandeinrichtung 9 mit den Förderrollen 12, 13 die untere Pressenförderbandeinrichtung 14, insbesondere deren Förderrollen 12, 13, der gleichen Pressenetage 2. Damit können die Pressenförderbandeinrichtungen 14 und optional Ablöseförderbandeinrichtung 9 platzsparend angeordnet werden. Insbesondere befinden sich die Förderrollen 12, 13 in einem Höhenbereich der jeweiligen Pressenetage 2, welcher durch den Höhenbereich der Wirkflächen, also insbesondere der Oberseite und der Unterseite der Temperierplatte 8, definiert ist. Auf diese Weise ist der Zwischenbereich zwischen den Wirkflächen von zwei unterschiedlichen, jedoch benachbarten Pressenetagen 2 nicht durch die Förderrollen 12, 13 beschränkt.

Das "Umgreifen" ist ein Weg den "Bauraum" bezüglich der "Dicke" der Temperierplatten 8 zu minimieren - da unnötig dicke Temperierplatten 8 oder unnötig flach bauende Wickelungen bei den Förderbandeinrichtungen 10 unvorteilhaft sind.

Bei der Unterseite der Werkstücke 6 sollte das Förderband 11 immer mindestens bis zum nächsten Förderband 11 reichen, um einen lückenlosen oder lückenarmen Transport auszuführen. Bei der Oberseite der Werkstücke 6 könnten zwei mit kleinem Durchmesser ausgeführte zusätzliche Umlenkrollen verwendet werden, so dass das obere Förderband 11 ebenfalls so lang ist, wie das untere Förderband 11 auf dem das Werkstück 6 aufliegt.

Die Oberseiten der Förderbandeinrichtungen 10 einer Pressenetage 2, insbesondere die Oberseiten der Förderbänder 12 der Förderbandeinrichtungen 12, sind in der gleichen Höhe angeordnet, so dass das Werkstück 6 ohne Höhenversatz durch die Presse 1 durchgefahren werden kann.

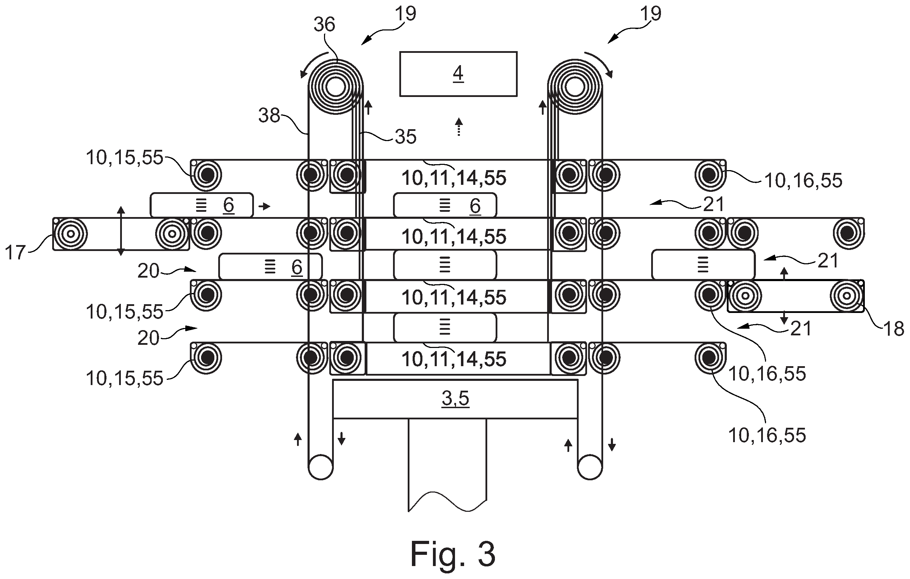

Die Figur 3 zeigt eine oder die Presse 1 in einer abgewandelten Ausführung. In dieser Ausführung weist die Presse 1 keine oberen Pressenförderbandeinrichtungen 14 und/oder Ablöseförderbandeinrichtungen 9 auf. Bei einer Alternative kann jedoch auch diese Presse 1 die oberen Pressenförderbandeinrichtungen 14 und/oder Ablöseförderbandeinrichtungen 9 aufweisen.

Die Presse 1 weist die Verfahranordnung 19 auf, welche ausgebildet ist, die Pressenetagen 2 derart zu verfahren, dass Abstände zwischen den Pressenetagen 2 beim Öffnen und/oder Schließen der Presse 1 parallel und/oder zeitgleich verändert werden. Insbesondere wird die Presse 1 mit den Pressenetagen 2 akkordeonartig geöffnet und/oder geschlossen. Aber auch bei diesem Ausführungsbeispiel können andere Verfahrensordnungen zum Einsatz kommen.

Die Presse 1 ist in der Figur 3 in einem geschlossenen Zustand gezeigt, wobei der Pressvorgang durchgeführt wird. So sind die Pressenetagen 2 zu dem Stapel 7 zusammengefahren und die Andrückkraft, insbesondere die Pressenkraft, wirkt auf den Stapel 7.

Trotz des vollständig geschlossenen Zustands der Presse 1 verbleibt zwischen den Zuführförderbandeinrichtungen 15 ein Zuführspalt 20 für ein Werkstück 6, wobei der Zuführspalt 20 so dimensioniert ist, dass in dem geschlossenen Zustand der Presse 1 ein neues Werkstück 6 mit der gleichen Höhe des eingelegten Werkstücks 6 eingefahren werden kann. Der Zuführspalt 20 wird dadurch sichergestellt, dass die Zuführförderbandeinrichtungen 15 an der Unterseite gegenüber der Unterseite der Wirkfläche der gleichen Pressenetage 2 in der Höhe nach oben zurückversetzt sind. Durch den Höhenversatz zwischen der Wirkfläche der Pressenetage 2 und der Unterseite der Zuführförderbandeinrichtungen 15 wird erreicht, dass das neue Werkstück 6 in die Zuführförderbandeinrichtung 15 eingefahren werden kann, auch wenn die Presse 1 vollständig geschlossen ist.

Zwischen den Abführförderbandeinrichtungen 16 verbleibt ein Abführspalt 21 für ein Werkstück 6, wobei der Abführspalt 21 so dimensioniert ist, dass in dem geschlossenen Zustand der Presse 1 das Werkstück 6 mit der gleichen Höhe des eingelegten Werkstücks 6 ausgefahren werden kann. Der Abführspalt 21 wird dadurch sichergestellt, dass die Abführförderbandeinrichtungen 16 an der Unterseite gegenüber der Unterseite der Wirkfläche der gleichen Pressenetage 2 in der Höhe nach oben zurückversetzt sind. Durch den Höhenversatz zwischen der Wirkfläche der Pressenetage 2 und der Unterseite der Abführförderbandeinrichtungen 16 wird erreicht, dass das bearbeitete Werkstück 6 aus der Abführförderbandeinrichtung 16 ausgefahren werden kann, auch wenn die Presse 1 vollständig geschlossen ist.

Diese Ausgestaltung weist den Vorteil auf, dass das jeweilige Werkstück 6 in die Zuführförderbandeinrichtung 15 eingefahren werden kann bzw. aus der Abführförderbandeinrichtung 16 ausgefahren werden kann, auch wenn die Presse 1 geschlossen ist, insbesondere während ein Pressvorgang durchgeführt wird. Auf diese Weise kann eine Totzeit während des Pressvorgangs zum Zuführen des Werkstücks 6 in die Zuführförderbandeinrichtung 15 und/oder das Abführen des Werkstücks aus der Abführförderbandeinrichtung 16 genutzt werden, so dass die Automatisierung verbessert ist.

Damit kann die Beladeeinrichtung 17 die Zuführförderbandeinrichtung 15 bereits bei geschlossener Presse 1 bestücken. Die Entladeeinrichtung 18 kann die Abführförderbandeinrichtungen 16 bereits bei geschlossener Presse 1 leeren. Damit wird der Materialtransport zwischen der Beladeeinrichtung 17 und der Zuführförderbandeinrichtung 15 und der Materialtransport zwischen der Entladeeinrichtung 18 und der Abführförderbandeinrichtung 16 während des Pressvorgangs durchgeführt, so dass nach dem Öffnen der Presse 1 nur die verpressten Werkstücke 6 von den Pressenförderbandeinrichtungen 14 auf die Abführförderbandeinrichtungen 16 und neue Werkstücke 6 von den Zuführförderbandeinrichtungen 15 auf die Pressenförderbandeinrichtungen 14 parallel transportiert werden müssen, um einen neuen Pressvorgang zu starten. Damit wird die Totzeit der Presse 1, in der die Presse 1 keinen Pressvorgang durchführt, auf ein Minimum reduziert. Durch dieses Vorgehen kann die Beladeeinrichtung 17 quasi beliebig ausgebildet sein und die Zuführförderbandeinrichtungen 15 gleichzeitig, teilweise gleichzeitig oder seriell und/oder nacheinander beladen. Analog kann die Entladeeinrichtung 18 ebenfalls beliebig ausgebildet sein und die Abführbandeinrichtungen 16 gleichzeitig, teilweise gleichzeitig oder seriell und/oder nacheinander entladen. Durch diese Ausgestaltung ist es somit möglich die Beladeeinrichtung 17 und/oder die Entladeeinrichtung 18 beliebig auszugestalten, ohne die Effizienz der Presse 1 zu beeinträchtigen. Auf diese Weise können Kosten für die Beladeeinrichtung 17 und/oder die Entladeeinrichtung 18 eingespart werden. Damit kann es im Extremfall sogar ausreichend sein, dass Werkstücke 6 einzeln und/oder nacheinander durch die Beladeeinrichtung 17 und/oder die Entladeeinrichtung 18 transportiert werden.

Die Effizienz der Presse 1 kann weiter erhöht werden, wenn die Abstände zwischen den Pressenetagen 2 bei geöffneter Presse 1 werkstückgerecht und/oder bedarfsgerecht eingestellt sind. Der Abstand zwischen den Pressenetage 2 ist variabel durch die Verfahranordnung 19 einstellbar und kann beispielsweise über eine Steuerung der Presse 1 kontrolliert werden. In der Fertigung werden die Pressenetage 2 nur so weit geöffnet, dass eine Zuführung bzw. Abführung der Werkstücke 6 durch die Pressenförderbandeinrichtungen 14 möglich ist, so dass durch eine Verringerung der Verfahrwege der Pressenetagen 2 noch weiter Taktzeit eingespart werden kann. Dabei befinden sich die Zuführförderbandeinrichtungen 15 und/oder die Abführförderbandeinrichtungen 16 stets in der korrekten Förderposition, da diese von den Pressenetagen getragen und/oder mitgeführt werden.

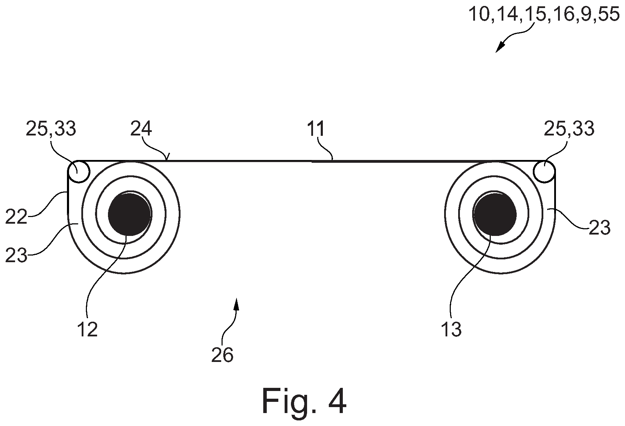

Die Figur 4 zeigt eine schematische Seitenansicht oder Schnittansicht der Förderbandeinrichtung 10, welche als obere und/oder untere Pressenförderbandeinrichtung 14, Ablöseförderbandeinrichtung 9 und/oder als Zuführförderbandeinrichtung 15 und/oder Abführförderbandeinrichtung 16 ausgebildet sein kann. Alternativ können die Pressen 1 zumindest teilweise mit anderen Förderbandeinrichtungen mit Endlosförderbändern und/oder umlaufenden Förderbändern ausgestattet sein.

Die Förderbandeinrichtung 10 ist als eine Wickelförderbandeinrichtung 55 ausgebildet und weist das Förderband 11, die erste Förderrolle 12 und die zweite Förderrolle 13 auf, wobei das Förderband 11 auf mindestens einer der Förderrollen 12 mehrlagig aufgewickelt ist. Im Betrieb wird das Förderband 11 von einer der Förderrollen 12,13 abgewickelt und auf die andere Förderrolle 13, 12 aufgewickelt. Auf diese Weise kann das Förderband 11 zwischen den Förderrollen 12, 13 transportiert werden.

Das Förderband 11 ist insbesondere an den Förderrollen 12, 13 verlierfest angebunden. Damit wird erreicht, dass die Position des Förderbands 11 in Querrichtung zu der Transportrichtung lagefest ist. Insbesondere kann das Förderband 11 in Querrichtung im Betrieb nicht herauswandern.

Das Förderband 11 weist einen aktiven Förderbandabschnitt 22 auf, wobei dieser durch das Förderband 11 zwischen den Förderrollen 12, 13 definiert ist. Insbesondere verläuft der aktive Förderbandabschnitt 22 zwischen den Wickelübergängen 23 der Förderrollen 12, 13 wobei bei den Wickelübergängen das Förderband 11 die jeweilige Förderrolle 12, 13 verlässt bzw. von dieser abhebt.

Das Förderband 11 weist einen Anlageabschnitt 24 auf, wobei der Anlageabschnitt 24 in Abhängigkeit der Einbaulage der Förderbandeinrichtung 10 eine Oberseite oder eine Unterseite der Förderbandeinrichtung 10 bildet und zur Anlage an das Werkstück 6 dient. Der Anlageabschnitt 24 verläuft in einer Ebene.

Die Länge des Förderbands 11 kann so begrenzt sein, dass die Förderbandeinrichtung 10 im Betrieb den Anlageabschnitt 24 genau einmal wechseln kann. Somit ist die Länge des Förderbands 11 so bemessen, dass ein aktueller Anlageabschnitt 24 durch Aufwickeln des Förderbands 11 auf einer der Förderrollen 12, 13 durch einen neuen Anlageabschnitt 24 ersetzt werden kann. Damit wird vergleichsweise wenig Förderband 11 benötigt, so dass die Förderrollen 12, 13 mit aufgewickelten Förderband 11 einen kleinen oder sogar kleinstmöglichen Durchmesser haben.

Alternativ kann das Förderband 11 länger ausgebildet sein, so dass im Dauerbetrieb der Förderbandeinrichtung 10 und/oder der Presse 1 eine Abnutzung des Förderbands 11 auf eine größere Länge verteilt wird und damit die Standzeit erhöht wird. Bei weiteren Alternativen kann das Förderband 11 auch so lange ausgebildet sein, dass dieses als Einmalband verwendet wird, welches nur in einer Transportrichtung durch die Förderbandeinrichtung 10 läuft.

Als Material für das Förderband 11 kann ein Metallband, ein Kunststoffband, ein Textilband etc. gewählt werden. Insbesondere kann das Förderband 11 mit PFTE oder PTFE oder einer anderen Antihaftbeschichtung beschichtet sein. Das Förderband 11 ist "ohne Fügestelle" oder über die gesamte Länge als durchgängiges Förderband ausgebildet, so dass keine Fügestellen in dem Förderband 11 im Pressspalt zu liegen kommen können, die sich abdrücken könnten.

Die Fördereinrichtung 10 kann optional mindestens oder genau einen Umlenkkörper 25 aufweisen, welcher eine Umlenkung zu dem Anlageabschnitt 24 umsetzt, so dass der Anlageabschnitt 24 unabhängig von einem aktuellen Durchmesser der Förderrollen 12, 13 stets an der gleichen Position, insbesondere in der gleichen Höhenlage ist. Der Umlenkkörper 25 ist beispielsweise als eine Umlenkrolle ausgebildet, welche einen kleineren Durchmesser als die Förderrolle 12, 13 aufweist. Beispielsweise ist das Verhältnis zwischen dem Durchmesser der Förderrolle 12, 13 und dem Durchmesser der Umlenkrolle größer als 4. Alternativ kann ein Gleitkörper als Umlenkkörper 25 eingesetzt werden.

Für den Antrieb der Förderbandeinrichtung 10 können unterschiedliche Varianten zum Einsatz kommen:
Prinzipiell ist es ausreichend, wenn eine der Förderrollen 12,13, insbesondere die in Materialflussrichtung hintere, zweite Förderrolle 13, mit einem Fremdenergieantrieb mit externer Energieversorgung, wie zum Beispiel mit einem elektrischen Antrieb, ausgestattet ist. Die andere Förderrolle 13, 12 kann dann über ein mechanischen Rückholantrieb mit einem mechanischen Energiespeicher, wie zum Beispiel einem Federenergiespeicher, zurückgeholt werden. Bei dieser Variante muss somit nur ein Fremdenergieantrieb eingebaut werden.

Alternativ hierzu kann der Fremdenergieantrieb mit externer Energieversorgung zum Beispiel über ein Getriebe beide Förderrollen 12, 13 aktiv antreiben. Bei den genannten Varianten können die Förderrollen 12, 13 jedoch nicht oder optional nur mit zusätzlichen Mitteln separat voneinander angesteuert werden.

Einfacher ist es dagegen, wenn jede der Förderrollen 12, 13 einen eigenen Fremdenergieantrieb mit externer Energieversorgung aufweist. Bei dieser Variante können die Förderrollen 12, 13 unabhängig voneinander angesteuert werden. Beispielsweise ist es möglich, dass eine Spannung des Förderbands 11 aktiv eingestellt werden kann. Insbesondere bei der Ausbildung als Ablöseförderbandeinrichtung 9 kann die Länge des aktiven Förderbandabschnitts 22 gesteuert und/oder kontrolliert eingestellt werden.

Bei einem möglichen Ausführungsbeispiel bilden die ersten Förderrolle 12, die zweite Förderrolle 13 sowie das Förderband 11 eine zusammenhängende oder selbsthaltende Baugruppe, welche optional in einer Wechselkassette angeordnet ist oder eine Wechselkassette 26 bildet. Damit wird bei einem Verschleiß des Förderbands 11 ein Austausch des Förderbands 11 deutlich erleichtert, indem die zusammenhängende Baugruppe als Wechselset oder Wechselkassette 26 ausgetauscht werden kann.

Für den Fall, dass die Förderbandeinrichtung 10 als Pressenförderbandeinrichtung 14 ausgebildet ist, ergibt sich der Vorteil, dass das Förderband 11 durch den Stapel 7 nur einfach durchgeführt werden muss. Dies vereinfacht den konstruktiven Aufbau und reduziert den Einfluss des Förderbands 11 in dem Stapel 7 als Störkörper.

Für den Fall, dass die Förderbandeinrichtung 10 als Zuführförderbandeinrichtung 15 oder Abführförderbandeinrichtung 16 ausgebildet ist, ergibt sich der Vorteil, dass im Vergleich zu einem Endlosförderband der Zuführspalt 20 bzw. der Abführspalt 21 weniger versperrt ist und/oder dass keine Riemenspannung usw. wie bei einem umlaufenden Förderband notwendig ist, und damit beliebige Materialien eingesetzt werden können, die z.B. bei dauerhafter Riemenspannung nicht funktionieren würden oder z.B. eine Gewebeverstärkung erfordern würden, damit sie nicht "davonkriechen".

Für den Fall, dass die Förderbandeinrichtung 10 als Ablöseförderbandeinrichtung 9 ausgebildet ist, ergibt sich der Vorteil, dass die Länge des aktiven Förderbandabschnitts 22 besonders einfach, insbesondere durch Ansteuerung der Förderrollen 12, 13, eingestellt werden kann.

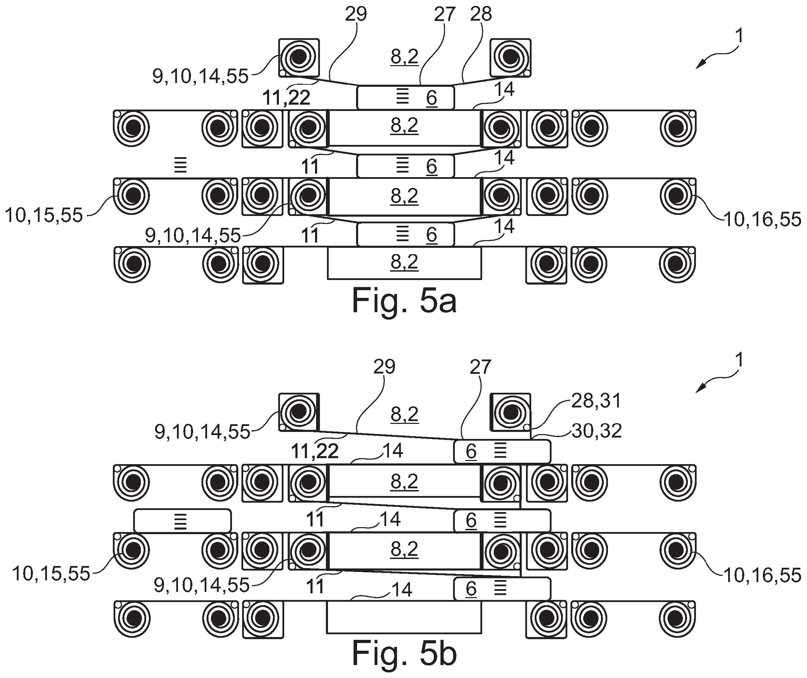

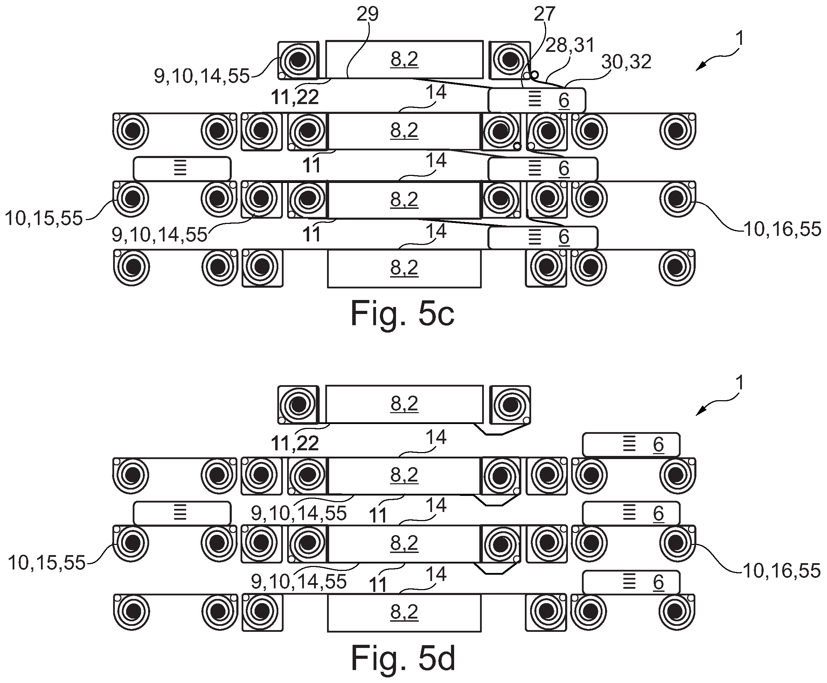

Die Figuren 5 a, b, c, d illustrieren die Funktionsweise der Ablöseförderbandeinrichtungen 9 und damit eines Verfahrens zum Ablösen von mindestens einem Werkstück 6 von dem Förderband 11.

Die Presse 1 ist nur auszugsweise dargestellt, alternativ können die Ablöseförderbandeinrichtungen 9 in anderen Pressen eingesetzt werden.

In den gezeigten Figuren ist die Presse 1 in einem geöffneten Zustand dargestellt, wobei die Temperierplatte 8 oder andere druckübertragende Elemente mit Wirkflächen von der Oberseite der Werkstücke 6 abgehoben sind. Bei alternativen Ausgestaltungen ist die Presse 1 nur teilgeöffnet, so dass eine Klemmkraft auf die Werkstücke 6 verbleibt, um diese zu fixieren.

Die Ablöseförderbandeinrichtungen 9 sind mit dem Förderband 11 jeweils an der Unterseite der tragenden Pressenetage 2 angeordnet und/oder liegen an der Oberseite des jeweiligen Werkstücks 6 an. Das Förderband 11 verläuft somit jeweils zwischen dem Werkstück 6 und der Temperierplatte 8 bzw. dem anderen druckübertragenden Element. Die Werkstücke 6 haften an dem Förderband 11. Funktion der Ablöseförderbandeinrichtung 9 ist es, die Werkstücke von dem Förderband 11 abzulösen.

In der Figur 5 a ist der Zustand direkt nach dem Pressvorgang gezeigt, wobei das Werkstück 6 jeweils vollflächig an einem Haftabschnitt 27 des Förderbands 11 der Ablöseförderbandeinrichtung 9 anhaftet. Um ein Abheben des Werkstücks 6 von dem darunter angeordneten Förderband 11 der Pressenförderbandeinrichtung 14 zu verhindern, wird der aktive Förderbandabschnitt 22 verlängert, so dass dieser zugkraftfrei oder zugkraftarm an dem Werkstück 6 anhaftet. Der aktive Förderbandabschnitt 22 ist damit länger als der kürzeste Förderbandweg des Förderbands 11 zwischen den Förderrollen 12, 13. Insbesondere wird ein Vorlaufabschnitt 28 des Förderbands 11, welcher in Transportrichtung vor dem Haftabschnitt 27 angeordnet ist, und ein Nachlaufabschnitt 29, welcher in Transportrichtung hinter dem Haftabschnitt 27 angeordnet ist, entspannt. Beispielsweise können der Vorlaufabschnitt 28 und der Nachlaufabschnitt 29 schlaff sein.

In der Figur 5 b ist das Werkstück 6 in einem Endbereich der darunterliegenden Pressenförderbandeinrichtung 14 angeordnet. Der Transport erfolgt durch die Pressenförderbandeinrichtung 14. Der Vorlaufabschnitt 28 beginnt durch den Transport des Werkstücks 6 und einem Einwickeln des Förderbands 11 auf die zweite Förderrolle 12 eine Zugkraft aufzubauen, so dass das Förderband 11 in einem vorlaufenden Anfangsbereich des Haftabschnitts 27 von dem Werkstück 6 gelöst wird. Alternativ hierzu kann jedoch auch vorgesehen sein, dass der Vorlaufabschnitt 28 weiterhin zugkraftfrei, zugkraftarm und/oder schlaff geführt ist.

In der Figur 5 c ist das Werkstück 6 soweit in Transportrichtung bewegt, dass das Werkstück 6 in Transportrichtung über die Ablöseförderbandeinrichtung 9, insbesondere die zweite Förderrolle 13 übersteht. Der Vorlaufabschnitt 28 des Förderbands 11 ist so weit in Transportrichtung ausgezogen, dass das Förderband 11 einen Umschlagbereich 30 bildet, wobei in dem Umschlagbereich 30 das Förderband 11 umgelenkt wird. Das Förderband 11 befindet sich in einem Hauptablösezustand. Der Umschlagbereich 30 ergibt sich damit als ein Übergang von dem Haftabschnitt 27 und einem Freiabschnitt 31, welcher durch den Vorlaufabschnitt 28 gebildet ist oder von einem bereits abgezogenen Bereich des Haftabschnitts 27 gebildet ist.

Der Umschlagbereich 30 ergibt sich durch den Übergang von dem Haftabschnitt 27 zu dem Freiabschnitt 31 und wird durch den Haftabschnitt 27 und ein Zurückziehen des Freiabschnitts 31 in einer Gegenrichtung zu der Transportrichtung erzeugt. Dadurch wird der Umschlagbereich 30 selbst gebildet und/oder ist umlenkkörperfrei ausgebildet. Das von dem Umlenkbereich 30 umschlossene Volumen ist leer.

Das Ablösen des Förderbands 11 von dem Werkstück 6 kann durch ein Zurückziehen des Förderbands 11, insbesondere des Vorlaufabschnitts 28, im Speziellen des Freiabschnitts 31, oder durch ein Weitertransportieren des Werkstücks 6 in Transportrichtung oder durch eine Kombination dieser Maßnahmen erfolgen.

Bei dem Ablösen ergibt sich eine Hauptablöselinie 32, an der sich das Förderband 11 von dem Werkstück 6 ablöst und welche im Wesentlichen senkrecht zu der Transportrichtung ausgerichtet ist, die jedoch geradlinig oder auch gekrümmt ausgebildet sein kann.

Bei dem Ablösen des Förderbands 11 von dem Werkstück 6 befindet sich die Ablöseförderbandeinrichtung 9 in einem Hauptablösemodus und das Förderband 11 in einem Hauptablösezustand. Der Hauptablösemodus beginnt bereits in dem Zustand in der Figur 5 b, wenn bereits in diesem Zustand der Vorlaufabschnitt 28 und/oder der Freiabschnitt 31 mit einer Zugkraft durch den Transport des Werkstücks 6 und/oder durch die Ablöseförderbandeinrichtung 9 beaufschlagt wird. Der Umschlagbereich 30 ist in dem Hauptablösemodus wahlweise an einem in Transportrichtung vorderen Ende der Ablöseförderbandeinrichtung 9, insbesondere in der Höhe des vorderen Wickelübergangs 23, oder an dem vorderen Ende des Anlageabschnitts 24 bei eingezogenen Förderband 11 oder - soweit vorhanden - an dem vorderen Bereich des Umlenkkörper 25 angeordnet.

Der Umschlagbereich 30 weist einen Umlenkwinkel des Förderbands 11 auf, welcher beispielsweise 90°, wie in der Figur 5 b gezeigt, oder mehr als 120°, insbesondere mehr als 150° aufweist, wie diese in der Figur 5 c gezeigt ist. Der Umlenkwinkel des Förderbands 11 in dem Umschlagbereich 30 wird definiert durch die Position des Werkstücks 6, die Position der Ablöseförderbandeinrichtung 9 relativ zu dem Werkstück 6, die Länge des Vorlaufabschnitts 28 und die Steifigkeit des Förderbands 11. Der Umlenkwinkel beschreibt den Winkel zwischen dem Haftabschnitt 27 und dem Freiabschnitt 31 in dem Umschlagbereich 30.

In der Figur 5 d ist das Förderband 11 von dem Werkstück 6 vollständig gelöst. In diesem Zustand kann das Förderband 11 von der Ablöseförderbandeinrichtung 9 wieder eingezogen werden, insbesondere soweit, dass der aktive Förderbandabschnitt 22 in der Länge dem kürzeste Förderbandweg der Ablöseförderbandeinrichtung 9 entspricht. Das Förderband 11 wird zumindest so weit eingezogen, dass es keine Störkontur bei einem Einfahren von einem neuen Werkstück 6 darstellt.

Soweit das Werkstück 6 ausreichend stabil liegt, kann die Ablösung des Förderbands 11 von dem Werkstück 6 in dem Hauptablösemodus wie beschrieben erfolgen.

Für den Fall, dass ein Ablösen des Förderbands 11 von Werkstück 6 zu einem Verrutschen des Werkstücks 6 führt, kann in dem Verfahren vorgesehen sein, dass die Presse 1 während des Hauptablösevorgangs eine Klemmkraft auf das Werkstück 6 ausübt. Durch die Klemmkraft wird das Werkstück 6 in der jeweiligen Position fixiert, so dass ein Verrutschen des Werkstücks 6 ausgeschlossen ist.

Prinzipiell kann das Ablösen des Förderbands 11 mit oder ohne Klemmkraft kontinuierlich erfolgen.

Alternativ hierzu kann das Ablösen des Förderbands 11 von dem Werkstück 6 abschnittsweise erfolgen, wobei alternierend das Werkstück 6 in einem Transportschritt in Transportrichtung transportiert wird und in einem Ablöseschritt nach dem Stillstand des Werkstücks 6 der Vorlaufabschnitt 28, insbesondere der Freiabschnitt 31, von der Ablöseförderbandeinrichtung 9 eingezogen wird, um das Förderband 11 von dem Werkstück 6 zu lösen.

Bei einer Verfahrensalternative ist es auch möglich, dass in dem Transportschritt die Klemmkraft gegenüber dem Ablöseschritt reduziert oder aufgehoben wird und in dem Ablöseschritt die Klemmkraft gegenüber dem Transportschritt erhöht oder aufgewandt wird. Bei der Verfahrensalternative wird das Werkstück in dem Ablöseschritt durch die Presse 1 festgehalten und in dem Transportschritt durch die Presse 1 freigegeben.

Eine besondere Herausforderung kann das Ablösen des Förderbands 11 in einem nachlaufenden Endabschnitt des Werkstücks 6 darstellen. Sobald das Werkstück 6 soweit in Transportrichtung transportiert wurde, dass es durch die Presse 1 nicht mehr mit einer Klemmkraft beaufschlagt werden kann, kann das Förderband 11 nur noch gegen das Eigengewicht des Werkstücks 6 abgezogen werden. Dies ist in vielen Fällen ausreichen. Für den Fall, dass dieser Endabschnitt nicht von dem Förderband 11 gelöst werden kann, ohne das Werkstück 6 unkontrolliert zu verrutschen, kann wie folgt vorgegangen werden:
Die Ablöseförderbandeinrichtung 9 kann einen Ablöseumlenkkörper 33 (Figur 4) aufweisen, welcher beispielsweise durch den Umlenkkörper 25 gebildet ist oder als ein separater Ablöseumlenkkörper realisiert ist. Die Ablöseförderbandeinrichtung 9 wird, insbesondere sobald das Werkstück 6 nicht mehr mit einer Klemmkraft beaufschlagt werden kann, von dem Hauptablösemodus in einen Nebenablösemodus umgeschaltet. Dabei wird das Förderband 11, insbesondere der Vorlaufabschnitt 28 so weit eingezogen, dass das Förderband 11 einen Umlenkbereich um den Ablöseumlenkkörper 33, insbesondere den Umlenkkörper 25 bildet. In dem Umlenkbereich wird das Förderband 11 in einem im Vergleich zu den Förderrollen 12, 13 engen Radius umgelenkt. Damit befindet sich das Förderband 11 in einem Nebenablösezustand. Hierbei bildet das Förderband 11 in dem Umlenkbereich eine sogenannte Messerkante, wobei der Ablöseumlenkkörper 33 über das Förderband 11, die Messerkante und/oder der Umlenkbereich auf dem Werkstück 6 aufliegt und das Förderband 11 in einer Nebenablöselinie von dem Werkstück 6 ablöst. Dabei wird parallel zum Transport des Werkstücks 6 der Vorlaufabschnitt 28 von der Ablöseförderbandeinrichtung 9 eingezogen, so dass ein Ablösen des Förderbands 11 nahezu kraftfrei erfolgt.

Insgesamt kann somit zunächst ein Großteil des Förderbands 11, insbesondere des Haftabschnitts 27, von Werkstück 6 gelöst werden, indem die Ablöseförderbandeinrichtung 9 in dem Hauptablösemodus betrieben wird und das Förderband 11 in dem Hauptablösezustand ist. Dann wird die Ablöseförderbandeinrichtung 9 in den Nebenablösemodus umgeschaltet und das Förderband 11 wird in den Nebenablösezustand überführt, um das Förderband 11 von dem verbleibenden Endabschnitt des Werkstücks 6 zu lösen. In dem Hauptablösemodus ist der Ablöseumlenkkörper 33 somit nicht aktiv.

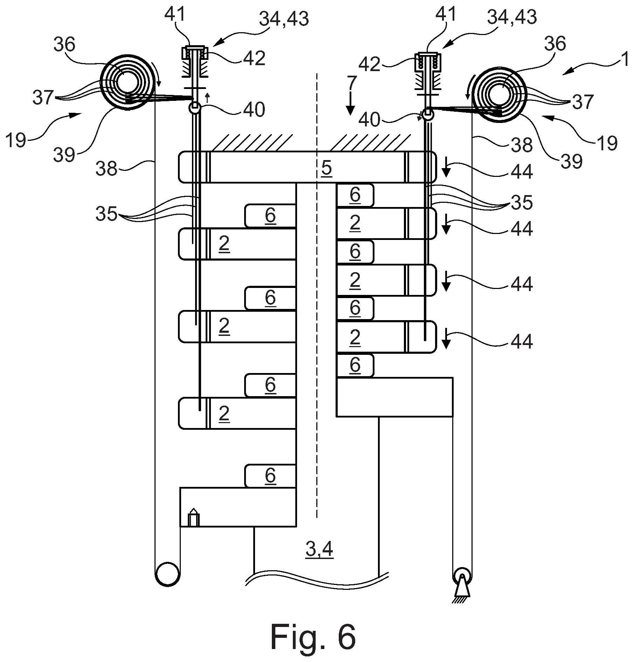

Die Figur 6 zeigt eine Ausgestaltung der Verfahranordnung 19 für die Presse 1 zum Verfahren der Pressenetage 2. Optional weist die Verfahranordnung 19 eine Zugmitteleinrichtung 34 auf, wie diese nachfolgend noch erläutert wird. Die Verfahranordnung 19 weist für die zu bewegenden Pressenetagen 2 jeweils mindestens ein Zugmittel 35 auf, wobei das Zugmittel 35 mit der zugeordneten Pressenetage 2 fest verbunden ist. Jedem der zu bewegenden Pressenetagen 2 sind mindestens zwei Zugmittel 35 zugeordnet, um eine Verkippungsfreiheit zu gewährleisten sind jeder Pressenetage 2 vier der Zugmittel 35 zugeordnet, welche zum Beispiel in Eckbereichen der zugeordneten Pressenetage 2 befestigt sind. Durch die Zugmittel 35 können die Pressenetagen 2 in der Presse 1 in der Höhe verfahren werden. Hierzu werden die Zugmittel 35 einer Pressenetage 2 eingezogen, so dass die Pressenetage 2 in die Höhe gezogen wird.

Die Presse 1 weist für die Zugmittel 35 der unterschiedlichen Pressenetagen 2 jeweils eine Seiltrommel 36 auf, wobei die Seiltrommel 36 für jedes Zugmittel 35 der unterschiedlichen Pressenetagen 2 einen Wickelbereich 37 aufweist, wobei die Wickelbereiche 37 unterschiedliche Wickeldurchmesser oder allgemeiner Wickelverläufe aufweisen. Für ein Verfahren der Pressenetagen 2 wird die Seiltrommel 36 rotiert, um die Zugmittel 35 aufzuwickeln. Durch die unterschiedlichen Wickelverläufe in den Wickelbereichen 37 werden die darauf laufenden Zugmittel 35 unterschiedlich schnell eingezogen, wobei die Seiltrommel 36 so ausgebildet ist und rotiert wird, dass die Pressenetagen 2 bei geschlossener Presse 1 in dem Stapel 7 an der Anschlageinrichtung 4 anliegen. Anders ausgedrückt bildet jeder Wickelbereich 37 mit dem zugeordneten Zugmittel 35 ein Zugmittelgetriebe, wobei sich die unterschiedlichen Zugmittelgetriebe durch die Übersetzung unterscheiden.

Jede der Seiltrommel 36 ist eine Mehrzahl von Zugmittel 35 zugeordnet, wobei die zugeordneten Zugmittel 35 in einem gemeinsamen Bereich, zum Beispiel einen Eckbereich der Pressenetagen 2 angeordnet sind.

Die Seiltrommeln 36 könnten prinzipiell durch einen Motor angetrieben werden. Bei dem gezeigten Ausführungsbeispiel sind die Seiltrommeln 36 jedoch mit der Andrückeinrichtung 3 wirkverbunden, so dass durch ein Schließen der Presse 1 die Seiltrommeln 36 rotiert werden, um die Zugmittel 35 auf die Seiltrommel 36 zu wickeln. Hierfür ist ein Hauptzugmittel 38 vorgesehen, welches mit der Andrückeinrichtung 3 und mit der Seiltrommel 36 wirkverbunden ist. Genauer betrachtet ist das Hauptzugmittel 38 mit einem Ende an der Andrückeinrichtung 3, insbesondere an dem Stempel 4 befestigt, wird zur Richtungsumkehr umgelenkt und ist mit dem anderen Ende mit der Seiltrommel 36 fest verbunden. Diese weist einen Hauptwickelbereich 39 auf, so dass das Hauptzugmittel 38 bei einer Rotation der Seiltrommel 36 auf- oder abgewickelt wird. Bei einer Verschiebung des Stempels 4 wird das Hauptzugmittel 38 in Gegenrichtung zu der Verschieberichtung des Stempels 4 gezogen und rotiert die Seiltrommel 36.

Durch die Verfahranordnung 19 wird erreicht, dass die Pressenetagen 2 über eine Verfahrbewegung der Andrückeinrichtung 3 in der Höhe verfahren werden. Durch die unterschiedlichen Wickelbereiche 37 können die Höhenposition der Pressenetagen 2 und die Abstände der Pressenetagen 2 konstruktiv beliebig voreingestellt werden.

Durch die Verfahranordnung 19 werden die Abstände zwischen den Pressenetage 2 beim Öffnen und/oder beim Schließen der Presse 1 parallel und/oder zeitgleich verändert. Beim Öffnen der Presse 1 werden die Pressenetagen 2 insbesondere so verfahren, dass sich zeitgleich Abstände zwischen den Pressenetagen 2 ergeben. Wird die Presse 1 durch ein Verfahren der Andrückeinrichtung 3 und/oder des Stempels 4 weiter geöffnet, so werden auch die Abstände, insbesondere alle Abstände zwischen den Pressenetagen 2 und optional zwischen der angrenzenden Pressenetage 2 zu der Andrückeinrichtung 3 und/oder zwischen der angrenzenden Pressenetage 2 zu der Anschlageinrichtung 4 weiter vergrößert. Wird die Presse 1 durch ein Verfahren der Andrückeinrichtung 3 und/oder des Stempels 4 weiter geschlossen, so werden auch die Abstände, insbesondere alle Abstände zwischen den Pressenetagen 2 und optional zwischen der angrenzenden Pressenetage 2 zu der Andrückeinrichtung 3 und/oder zwischen der angrenzenden Pressenetage 2 zu der Anschlageinrichtung 4 weiter verkleinert.

Durch das zeitgleiche oder parallele Öffnen der Pressenetagen 2 muss die Presse 1 nur so weit geöffnet werden, bis die Werkstücke 6 aus der Presse 1, aus dem Stapel 7 und/oder von der Pressenförderbandeinrichtung 14 entladen und/oder in der Presse 1, in den Stapel 7 und/oder auf die Pressenförderbandeinrichtung 14 geladen werden können. Dadurch, dass die Presse 1 nur so weit geöffnet werden muss, bis die Abstände ausreichend für einen Austausch der Werkstücke 6 sind, kann weitere Taktzeit eingespart werden, da die Presse 1 nicht vollständig oder bis zum Anschlag der Andrückeinrichtung 3 geöffnet werden muss.

Ein weiterer Vorteil von dem zeitgleichen und/oder parallelen Öffnen der Pressenetagen 2 ist, dass alle Werkstücke 6 auf den unterschiedlichen Pressenetagen 2 zumindest ähnlichen Druck- und/oder Temperaturbedingungen vor dem Zusammenfahren des Stapels 7 unterworfen sind. Dies erhöht die Fertigungsqualität bei der Fertigung in der Presse 1.

Allerdings führt die Ausbildung der Verfahranordnung 19 zu Herausforderungen hinsichtlich der Abstimmung zwischen den Längen der Zugmittel 35 und der Höhenausdehnung des Stapels 7: Sind die Längen der Zugmittel 35 zu kurz bemessen, so können diese ohne weitere Maßnahmen beim Schließen der Presse 1 im worst-case reißen oder überdehnt werden. Sind die Zugmittel 35 zu lang bemessen, so wird der Stapel 7 über die Verfahranordnung 19 nicht vollständig geschlossen, vielmehr erfolgt das Schließen durch die Andrückeinrichtung 3. In diesem Fall sind die Zugmittel 35 im geschlossenen Zustand der Presse 1 schlaff und damit in der Lage undefiniert. Vor diesem Hintergrund muss die Abstimmung zwischen den Längen der Zugmittel 35 und der Höhenausdehnung des Stapels 7 sehr genau durchgeführt werden, da die Längen der Zugmittel 35 und die Höhenausdehnung des Stapels 7 ein konstruktiv betrachtet überdefiniertes System darstellen.

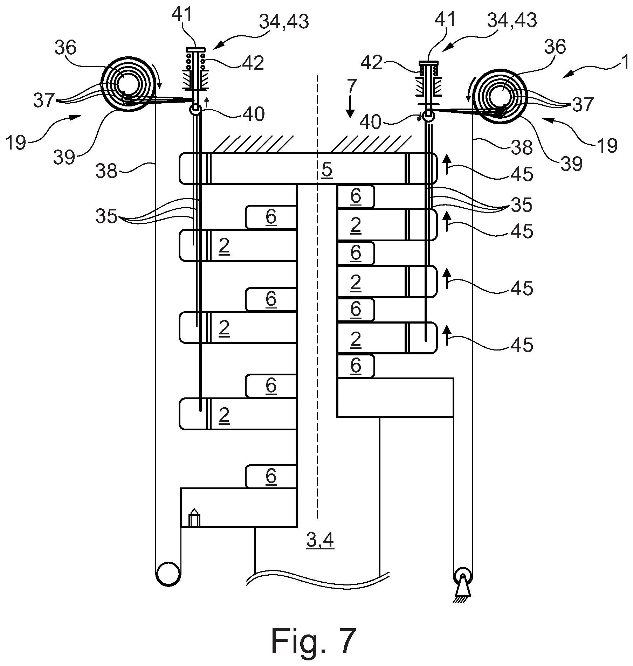

Um diese Herausforderung zu lösen, kann die Verfahranordnung 19 die Zugmitteleinrichtung 34 aufweisen. Zur Beschreibung wird auf die Figuren 6 und 7 verwiesen. Diese zeigen die Presse 1, wobei diese keine Fördereinrichtungen 10 aufweisen. Insbesondere kann die Presse 1 mindestens eine der Fördereinrichtungen 10 einige oder alle Fördereinrichtungen 10 aufweisen.

Die Presse 1 ist in den Figuren 6, 7 auf der linken Seite in dem geöffneten Zustand und auf der rechten Seite in den geschlossenen Zustand gezeigt. Die Zugmitteleinrichtung 34 ist jedem der Zugmittel 35 selektiv und/oder einzeln zugeordnet.

Die Zugmitteleinrichtung 34 weist ein Zugmittelführungsmodul 40 auf, wobei das Zugmittelführungsmodul 40 bei diesem Ausführungsbeispiel als eine Umlenkrolle ausgebildet ist. Über das Zugmittelführungsmodul 40 wird das Zugmittel 35 geführt und bei diesem Ausführungsbeispiel um 90° umgelenkt. Andere Winkel sind prinzipiell denkbar. Das Zugmittel 35 ist an der Pressenetage 2 fest angebunden und verläuft durchgehend als ungetrenntes Zugmittel 35 bis zu dem Zugmittelführungsmodul 40. Das Zugmittelführungsmodul 40 ist in Höhenrichtung als Auslenkungsrichtung verfahrbar angeordnet. Dabei kann das Zugmittelführungsmodul 40 - wie gezeigt - exakt in Höhenrichtung veränderbar sein, alternativ und wie auch in den weiteren Ausführungsbeispielen gezeigt, kann das Zugmittelführungsmodul 40 über eine Schwenkung in der Höhenrichtung veränderbar sein oder die Auslenkungsrichtung einen anderen Winkel einnehmen.

Durch eine Änderung der Position des Zugmittelführungsmoduls 40 in der Höhe oder allgemein in der Auslenkungsrichtung kann eine sogenannte Wirklänge des Zugmittels 35 eingestellt werden. Die Wirklänge des Zugmittels 35 definiert die Länge des Zugmittels 35 in der Presse 1 in Bezug auf einen stationären Referenzpunkt. Wird somit das Zugmittelführungsmodul 40 nach unten oder in Auslenkungsrichtung verfahren, so wird die Wirklänge des Zugmittels 35 verlängert. Wird das Zugmittelführungsmodul 40 nach oben oder gegen die Auslenkungsrichtung verfahren, so wird die Wirklänge des Zugmittels 35 verkürzt. Das Zugmittelführungsmodul 40 ist außerhalb der Presse 1 und/oder insbesondere in jedem Betriebszustand der Presse 1 oberhalb der Pressenetagen 2 angeordnet.

Die Zugmitteleinrichtung 34 weist ein Federwirkmodul 41 auf, welches ausgebildet ist, das Zugmittelführungsmodul 40 mit einer Federkraft zu beaufschlagen, wobei die Federkraft gegen die Gewichtskraft der angebundenen Pressenetage 2 wirkt. Insbesondere wirkt die Federkraft als eine Zugkraft auf das Zugmittel 35. Das Federwirkmodul 41 ist bei dem gezeigten Ausführungsbeispiel als ein Federmodul mit einer Druckfeder 42 ausgebildet. Diese liegt mit ihrem einen Ende auf einem stationären Anschlag auf, das Zugmittelführungsmodul 40 ist über einen Bolzen durch die Druckfeder 42 durchgeführt und an dem anderen Ende, zum Beispiel durch einen Anschlag, fixiert. Damit wirkt die Federkraft der Druckfeder 42 gegen eine Auslenkung des Zugmittelführungsmodul zu 40 nach unten oder in Auslenkungsrichtung und somit gegen die Gewichtskraft der angebundenen Pressenetage 2.

Die Längen der Zugmittel 35 sind so abgestimmt, dass beim Schließen der Presse 1 oder bei geschlossener Presse 1 das Federwirkmodul 41 eine Zugkraft auf die Zugmittel 35 aufbringt, so dass die Zugmittel 35 beim Schließen der Presse 1 oder bei geschlossener Presse 1 gespannt sind. Damit bewirkt die Zugmitteleinrichtung 34 eine Längenkompensation der Zugmittel 35, so dass keine Überdefinition bezüglich der Höhe des Stapels 7 und den Längen der Zugmittel 35 mehr vorliegt.

Neben dieser Längenkompensation kann durch eine vorteilhafte Abstimmung insbesondere der Zugmitteleinrichtungen 34 und der Längen der Zugmittel 35 weitere Vorteile erreicht werden:
Eine Herausforderung bei der Presse 1 mit der Zugmitteleinrichtung 34 ist, dass die Pressenetagen 2 sich bei geöffneter Presse beim Beladen oder Entladen mit dem Werkstück 6 in einem nicht-definierten Höhenposition befinden können, da die Pressenetagen 2 gegen die Zugkraft der Zugmitteleinrichtungen 34 durch die Gewichtserhöhung beim Beladen nach unten oder bei der Gewichtserniedrigung beim Entladen nach oben durchfedern können.

Um dieses Verhalten zu unterdrücken werden die Zugmitteleinrichtungen 34 so ausgelegt, dass diese bei geöffneter Presse 1 das Zugmittelführungsmodul 40 lagedefiniert halten, so dass die Pressenetage 2 in einer definierten Höhenposition ist. Dagegen sind die Zugmitteleinrichtung 34 so ausgelegt, dass diese bei dem Übergang zu der geschlossenen Presse 1 und/oder bei geschlossener Presse 1 das Zugmittel 35 mit einer Federkraft beaufschlagen, um die Überdefinition zu kompensieren.

Hierzu gibt es verschiedene Möglichkeiten:
Prinzipiell kann die Zugmitteleinrichtung 34 als eine Zugmittelführungsmodulanschlageinrichtung 43 ausgebildet sein, wobei die Zugmittelführungsmodulanschlageinrichtung 43 bei geöffneter Presse 1 das Zugmittelführungsmodul 40 in einem Anschlagzustand lagedefiniert hält. Dadurch, dass sich das Zugmittelführungsmodul 40 in dem Anschlagzustand befindet, verbleibt dieses insbesondere bei geringen Gewichtsänderungen durch das Entladen oder Beladen des Werkstücks 6 auf der zugeordneten Pressenetage 2 in dem Anschlagzustand, so dass auch die Pressenetage 2 in der definierten Höhenposition verbleibt.

In der Figur 6 ist eine Variante gezeigt, wobei sich die Zugmittelführungsmodulanschlageinrichtung 43 bei geöffneter Presse 1 in einem Maximalwirklängenanschlagzustand befindet. In dem Maximalwirklängenanschlagzustand ist die Wirklänge des Zugmittels 35 maximal. Bei dem gezeigten Ausführungsbeispiel befindet sich das Zugmittelführungsmodul 40 in einem unteren Anschlagzustand. Dabei ist die Federkraft des Federwirkmoduls 41 so ausgelegt, dass diese in diesem Zustand kleiner ist als die Gewichtskraft der unbeladenen Pressenetage 2, welche über das Zugmittel 35 wirkt. Somit wird sich bei einem Beladen oder Entladen der Pressenetage 2 mit dem Werkstück 6 die Höhenposition der Pressenetage 2 nicht ändern, so dass diese in einer definierten Höhenposition angeordnet ist.

Beim Schließen der Presse 1 wird die an die Zugmittelführungsmodulanschlageinrichtung 43 im Maximalwirklängenanschlagzustand angebundene Pressenetage 2 durch das Zugmittel 35 in der Höhe nach oben verfahren. Für eine Längenkompensation beim Übergang oder bei geschlossener Presse 1 wird das Zugmittelführungsmodul 40 über das Federwirkmodul 41 durch die Federkraft nach oben bewegt, so dass das Zugmittel 35 gespannt ist. Dabei wird die jeweilige Pressenetage 2 unmittelbar oder mittelbar durch die Andrückkraft und/oder Pressenkraft, welche über den Stapel 7 übertragen wird, nach oben gedrückt, so dass die Federkraft und die Andrückkraft die Pressenetage 2 gemeinsam bewegen. Somit lastet die Pressenetage 2 mit einer Restgewichtskraft als Andockrestgewichtskraft 44 beim Schließen nach unten ab.

In der Figur 7 ist eine Variante gezeigt, wobei sich die Zugmittelführungsmodulanschlageinrichtung 43 bei geöffneter Presse 1 in einem Minimallängenanschlagzustand befindet. In dem Minimalwirklängenanschlagzustand ist die Wirklänge des Zugmittels 35 minimal. Bei dem gezeigten Ausführungsbeispiel befindet sich das Zugmittelführungsmodul 40 in einem oberen Anschlagzustand. Dabei ist die Federkraft des Federwirkmoduls 41 so ausgelegt, dass diese größer ist als die Gewichtskraft der mit dem Werkstück beladenen Pressenetage 2, welche über das Zugmittel 35 wirkt. Somit wird sich bei einem Beladen oder Entladen der Pressenetage 2 mit dem Werkstück 6 die Höhenposition der Pressenetage 2 nicht ändern, so dass diese in einer definierten Höhenposition angeordnet ist.

Beim Schließen der Presse 1 wird die an die Zugmittelführungsmodulanschlageinrichtung 43 im Maximalwirklängenanschlagzustand angebundene Pressenetage 2 durch das Zugmittel 35 in der Höhe nach oben verfahren. Für eine Längenkompensation beim Übergang oder bei geschlossener Presse 1 wird bei einem Andocken der Pressenetage 2 nach oben das Zugmittelführungsmodul 40 über das Federwirkmodul 41 gegen die Federkraft nach unten oder in Auslenkungsrichtung bewegt, so dass das Zugmittel 35 gespannt bleibt. Somit wird die Pressenetage 2 beim Andocken nach oben mit einer Andockrestzugkraft 45 nach oben gezogen.

Eine weitere Möglichkeit ist dadurch gegeben, dass die Zugmitteleinrichtung 34 als eine Zugmittelführungsmodulsperreinrichtung 46 ausgebildet ist, welche ausgebildet ist, das Zugmittelführungsmodul 40 zu sperren und dadurch lagedefiniert zu halten. Insbesondere wird das Zugmittelführungsmodul 40 in beide oder alle Auslenkungsrichtungen gesperrt. Die Zugmittelführungsmodulsperreinrichtung 46 kann beispielsweise als eine aktivierbare reibschlüssige oder formschlüssige Sperreinrichtung ausgebildet sein. Alternativ hierzu kann die Zugmittelführungsmodulsperreinrichtung 46 ausgebildet sein, das Federwirkmodul 41 in den Maximalwirklängenanschlagzustand fest vor zu spannen. Für den Fall, dass das Federwirkmodul 41 eine Druckfeder aufweist, wird diese maximal komprimiert. Hierfür wird jedoch meist ein zusätzlicher Aktor benötigt.

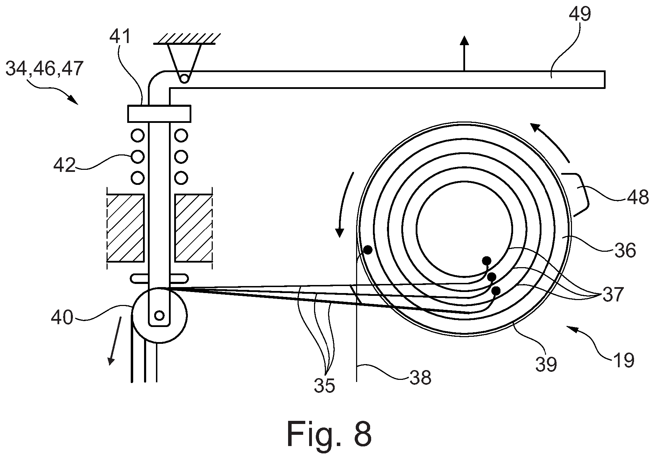

Eine Alternative ohne Aktor für die Zugmittelführungsmodulsperreinrichtung 46, ist in der Figur 8 schematisiert dargestellt. Die Seiltrommel 36 weist eine Steuerkontur 48 auf, welche mit der Seiltrommel 36 mit gedreht wird. Die Steuerkontur 48 wirkt auf ein mechanisches Übertragungsglied 49, welches durch Aktivierung durch die Steuerkontur 48 das Zugmittelführungsmodul 40 gegen die Federkraft des Federwirkmoduls 41 in den Maximalwirklängenanschlagzustand, hier den unteren Anschlag, zwingt. Alternativ kann das Zugführungsmodul 40 in den Minimalwirklängenanschlagzustand gezwungen werden.

Eine weitere Möglichkeit ist dadurch gegeben, dass die Zugmitteleinrichtung 34 als eine Zugmittelvorspannungsänderungseinrichtung 47 ausgebildet ist, wobei die Zugmittelvorspannungsänderungseinrichtung 47 ausgebildet ist, die Vorspannung des Federwirkmoduls 41 zu ändern. Die Zugmittelvorspannungsänderungseinrichtung 47 kann so ausgestaltet sein, dass bei geöffneter Presse 1 der Maximalwirklängenanschlagzustand oder der Minimalwirklängenanschlagzustand gegeben ist. Die Zugmittelvorspannungsänderungseinrichtung 47 kann durch unterschiedliche Steigungen der Wickelbereiche 37 ausschließlich mechanisch oder über einen Aktor elektro-mechanisch umgesetzt werden.

Um die Presse 1 auf unterschiedliche Werkstücke 6 einstellen zu können, kann die Zugmitteleinrichtung 34, insbesondere die Zugmittelführungsmodulanschlageinrichtung 43, die Zugmittelführungsmodulsperreinrichtung 46 und/oder die Zugmittelvorspannungsänderungseinrichtung 47, so ausgebildet sein, dass ein Offset des Zugmittels 35 in der Wirklänge und/oder die Federkraft des Federwirkmoduls 41 gesteuert, zum Beispiel durch eine Steuerungseinrichtung, eingestellt werden kann. Der Offset kann beispielsweise dadurch geändert werden, dass die Zugmitteleinrichtung 34 in der Höhenposition geändert wird. Die Federkraft des Federwirkmoduls 41 kann beispielsweise durch eine Änderung der Vorspannung umgesetzt werden.

Mit den gezeigten Alternativen ist es möglich, die Presse 1 auf das Werkstück 6 insbesondere automatisiert abzustimmen und eine definierte Höhenposition der Pressenetagen 2 bei geöffneter Presse 1 zu erreichen.

Bei einer möglichen Ausgestaltung sind die Zugmitteleinrichtungen 34 der Zugmittel 35 für die Pressenetagen 2 so ausgewählt und/oder eingestellt, so dass beim Übergang in den geschlossenen Pressenzustand Unterschiede bei den Anlagekräften in dem Stapel 7 kompensiert und/oder einstellbar sind.

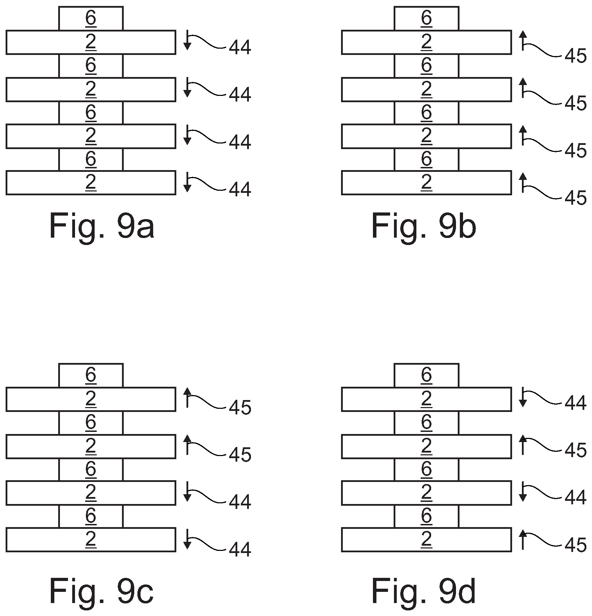

In der Figur 9 a ist ein Stapel 7 mit Pressenetagen 2 und darauf angeordneten Werkstücken 6 gezeigt, wobei die Zugmitteleinrichtung 34, insbesondere Zugmittelführungsmodulanschlageinrichtung 43 in dem Maximalwirklängenanschlagzustand ist. Hierdurch ergibt sich für jede Pressenetage 2 eine Andockrestgewichtskraft 44. Die Andockrestgewichtskräfte 44 der Pressenetagen 2 kumulieren sich, so dass auf das Werkstück 6 der untersten Pressenetage 2 eine kumulierte Andockrestgewichtskraft 44 wirkt. Auf die Werkstücke 6 der darüber angeordneten Pressenetagen 2 wirkt dagegen in Abhängigkeit der Position in dem Stapel 7 eine kleinere kumulierte Andockrestgewichtskraft 44 oder bei der obersten Pressenetage 2 keine Andockrestgewichtskraft 44 auf das Werkstück 6.

In der Figur 9 b ist ein Stapel 7 mit Pressenetagen 2 und darauf angeordneten Werkstücken 6 gezeigt, wobei die Zugmitteleinrichtung 34, insbesondere Zugmittelführungsmodulanschlageinrichtung 43 in dem Minimalwirklängenanschlagzustand ist. Hierdurch ergibt sich für jede Pressenetage 2 eine Andockrestzugkraft 45. Die Andockrestzugkraft 45 der Pressenetagen 2 kumulieren sich, so dass auf das Werkstück 6 der obersten Pressenetage 2 eine kumulierte Andockrestzugkraft 45 wirkt. Auf die Werkstücke 6 der darunter angeordneten Pressenetagen 2 wirkt dagegen in Abhängigkeit der Position in dem Stapel 7 eine kleinere kumulierte Andockrestzugkraft 45 oder bei der untersten Pressenetage 2 nur eine einfache Andockrestzugkraft 45 auf das Werkstück 6.

Bei der Ausführung in den Figuren 9 a, b sind zwar die kumulierten Restkräfte bereits vergleichsweise gering, insbesondere wesentlich geringer als bei Pressen, welche die Pressenetage von unten nach oben nacheinander "aufsammeln". Allerdings erfahren die Werkstücke 6 beim Zusammenfahren unterschiedliche Anlagekräfte in Abhängigkeit der Position in dem Stapel 7.

Um diese Anlagekräfte zu kompensieren oder gezielt einzustellen, können die Zugmitteleinrichtungen 34 bei unterschiedlichen Pressenetagen 2 gemischt den Maximalwirklängenanschlagzustand und den Minimalwirklängenanschlagzustand einnehmen. Dies kann durch die Zugmittelführungsmodulanschlageinrichtungen 43 oder durch die Zugmittelvorspannungsänderungseinrichtungen 47 umgesetzt werden.

In der Figur 9 c ist ein Beispiel gezeigt, wobei die unteren Pressenetagen 2 jeweils an Zugmitteleinrichtungen 34 angebunden sind, die den Maximalwirklängenanschlagzustand einnehmen und die oberen Pressenetagen 2 jeweils den Minimalwirklängenanschlagzustand einnehmen. Durch diese Verteilung ist das Problem der unterschiedlichen Anlagekräfte bereits reduziert, insbesondere halbiert, da sich die oberen Pressenetagen 2 mit der gegebenenfalls kumulierten Andockrestzugkraft 45 oben anlegen und die unteren Pressenetagen 2 mit der gegebenenfalls kumulierten Andockrestgewichtskraft 44 unten anlegen.

In der Figur 9 c ist ein Beispiel gezeigt, wobei die Pressenetagen 2 jeweils an Zugmitteleinrichtungen 34 angebunden sind, die abwechselnd oder alternierend den Maximalwirklängenanschlagzustand und den Minimalwirklängenzustand einnehmen. Durch diese Verteilung ist das Problem der unterschiedlichen Anlagekräfte weiter reduziert, da sich die jeweilige Andockrestgewichtskraft 44 und die jeweilige Andockrestzugkraft 45 von benachbarten Pressenetagen 2 aufhebt oder zumindest kompensiert. Damit ist ein Unterschied bei den Anlagekräften auf eine einfache Andockrestgewichtskraft 44 oder eine einfache Andockrestzugkraft 45 reduziert oder kann sogar vollständig kompensiert werden.

Damit erfahren die Werkstücke 6 beim Schließen der Presse 1 jeweils die gleichen Anlagekräfte, so dass die Werkstücke 6 mit den gleichen Prozessbedingungen prozessiert werden.

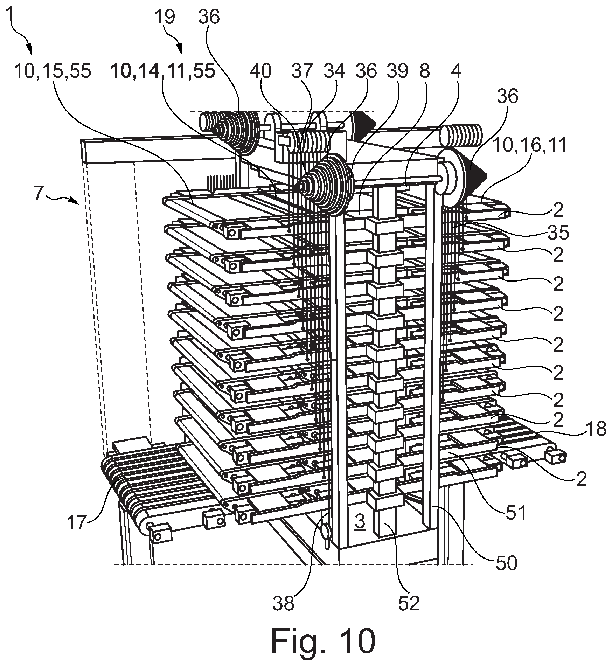

Die Figuren 10 und 11 zeigen eine dreidimensionale Darstellung der Presse 1 als ein Ausführungsbeispiel der Erfindung. Die Presse 1 weist eine Mehrzahl von Pressenetagen 2 auf, welche in Höhenrichtung in der Presse 1 verschiebbar angeordnet ist. Die Presse 1 weist ein Pressengestell 50 auf, wobei die Pressenetagen 2 in dem Pressengestell 50 über eine Linearführung 52 linear geführt sind. Die Pressenetagen 2 weisen jeweils einen Grundkörper 51 auf, welche jeweils als eine Rahmenstruktur ausgebildet sind. Ein Teil des Grundkörpers 51 bildet eine Führungskontur auf, die eine Säule umgreifen, um die Linearführung 52 zu bilden.

Die Presse 1 weist bodenseitig die Andrückeinrichtung 3 auf, welche über den Stempel 5 (verdeckt) die Andrückkraft auf die Pressenetagen 2 durch Verfahren in Höhenrichtung aufbringt und durch das Pressengestell 50 abgestützt ist. Die Presse 1 weist deckenseitig die Anschlageinrichtung 4 auf, welche durch das Pressengestell 50 getragen wird.

Die Pressenetagen 2 bilden zusammen mit den nicht dargestellten Werkstücken 6 den Stapel 7. In der Figur 10 und 11 ist die Presse 1 in einem geöffneten Zustand gezeigt. Die Pressenetagen 2 tragen jeweils eine der Temperierplatten 8, welche als Heizplatten ausgebildet sind und welche die Andrückkraft in dem Stapel 7 im geschlossenen Zustand der Presse 1 übertragen.

Jede der Pressenetagen 2 weist eine Mehrzahl von Förderbandeinrichtungen 10 auf, welche auch teilweise oder alle als beschriebene Wickelförderbandeinrichtungen 55 ausgebildet sind. Jede der Pressenetagen trägt eine Pressenförderbandeinrichtung 14, deren Förderband 11 durch den Stapel 7 verläuft. Ferner trägt jede Pressenetage 2 eine Zuführförderbandeinrichtung 15 und eine Abführförderbandeinrichtung 16. Über die Zuführförderbandeinrichtung 15 wird das Werkstück 6 beladen und zu der Pressenförderbandeinrichtung 14 gefördert, dort verpresst und nachfolgend über die Abführförderbandeinrichtung 16 zum Entladen bereitgestellt.

Die Presse 1 weist die Beladeeinrichtung 17 auf, welche die Zuführförderbandeinrichtungen 15 mit dem Werkstück 6 belädt. Ferner weist Presse 1 die Entladeeinrichtung 18 auf, welche das Werkstück 6 von der Abführförderbandeinrichtungen 16 entlädt. Die Beladeeinrichtung 17 und Entladeeinrichtung 18 weist jeweils eine weitere Förderbandanordnung auf, welche in der Höhe verfahrbar sind. Damit wird das Werkstück 6 in einer Transportrichtung durch die Presse 1 durchgeführt. Optional kann die Presse 1 die Ablöseförderbandeinrichtungen 9 aufweisen.

Die Presse 1 weist die Verfahranordnung 19 auf, welche die Pressenetagen 2 in der Höhe verfährt, wie dies zuvor erläutert wurde. Hierzu verfügt die Verfahranordnung 19 über das Hauptzugmittel 38, wobei das Hauptzugmittel 38 mit einem freien Ende mit dem Stempel 5 wirkverbunden ist und insbesondere an diesem befestigt ist. Das Hauptzugmittel wird umgelenkt und nachfolgend zu den Seiltrommeln 36 geführt. Dabei umschlingt es die jeweilige Seiltrommel 36 dem Hauptwickelbereich 39, so dass die jeweilige Seiltrommel 36 bei einem Verfahren des Stempels 5 rotiert. Es kann für jede Seiltrommel 36 ein separates Hauptzugmittel 38 vorgesehen sein. Alternativ und wie hier gezeigt können zwei Seiltrommeln 36 drehfest miteinander verbunden sein und von einem gemeinsamen Hauptzugmittel 38 angetrieben werden.

Die Verfahranordnung 35 weist für jede Seiltrommel 36 eine Mehrzahl von Zugmitteln 35 auf, wobei die Zugmittel 35 an einem freien Ende an der zugeordneten Pressenetage 2 zugfest angeordnet, insbesondere fixiert sind. Das andere freie Ende läuft über einen Wickelbereich 37 die Seiltrommel 36 und ist an dieser befestigt, so dass bei einer Rotation der Seiltrommel 36 das Zugmittel 35 eingezogen oder ausgelassen wird. Hierdurch werden die Pressenetagen 2 in die Höhe gezogen oder abgelassen. Die Wickelbereiche 37 für die Zugmittel 35 der unterschiedlichen Pressenetagen 2 weisen unterschiedliche Durchmesser auf, so dass die unterschiedlichen Verfahrwege der Pressenetagen 2 beim Schließen der Presse 1 eingestellt sind. Die Verfahranordnung 35 kann mit allen Variationen ausgestattet sein, die zuvor beschrieben wurden.

Auf diese Weise werden die Pressenetagen 2 beim Schließen der Presse 1 so verfahren, dass sich die Abstände zwischen den Pressenetage 2 während des Schließens oder Öffnens der Presse 1, insbesondere bei vereinzelten Pressenetagen 2, zeitgleich und/oder parallel verändern. Die Verfahranordnung 35 weist die Zugmitteleinrichtungen 34 auf, welche in der Figur 12 erläutert werden.

Figur 12 zeigt in einer schematischen Darstellung eine mögliche konstruktive Ausgestaltung der Zugmitteleinrichtungen 34. Jede der Zugmitteleinrichtungen 34 weist ein Zugmittelführungsmodul 40 ausgebildet als eine Umlenkrolle auf, über die das Zugmittel 35 verläuft. Bei diesem Ausführungsbeispiel kann das Zugmittelführungsmodul 40 über einen Tragarm 53 um einen außermittigen Schwenkpunkt geschwenkt werden, so dass es seine Höhe als Auslenkrichtung in Zugrichtung des Zugmittels 35 einstellen kann. Die Schwenkachse und/oder der Tragarm 53 verläuft in mindestens einer Position des Zugmittelführungsmoduls 40 waagrecht. Verdeckt ist das jeweils zugeordnete Federwirkmodul 41, welches zum Beispiel als Druckfeder oder Zugfeder ausgebildet ist und welches das Zugmittelführungsmodul 40 mit einer Federkraft beaufschlagen kann, so dass die Federkraft über das Zugmittelführungsmodul 40 auf das Zugmittel 35 gegen die Gewichtskraft der wirkverbundenen Pressenetage 2 wirken kann.

Die Zugmitteleinrichtungen 34 können als Zugmittelführungsmodulanschlageinrichtungen 43, Zugmittelführungsmodulsperreinrichtungen 46 und/oder als Zugmittelvorspannungsänderungseinrichtungen 47 ausgebildet sein. Bei der Ausbildung als Zugmittelführungsmodulanschlageinrichtungen 43 kann der Tragarm 53 zum Beispiel nach oben oder nach unten gegen ein Gehäuse 54 der Zugmittelführungsmodulanschlageinrichtungen 43 anschlagen. Aus der Darstellung ist auch abzuleiten, dass mit weiteren Umlenkungen der Zugmittel 35 eine kinematische Umkehr umgesetzt werden kann, wobei die Kraftrichtungen der Zugmitteleinrichtungen 34 nicht nach oben, sondern nach unten oder in eine beliebige Richtung gerichtet sein können.

Die einzelnen Zugmitteleinrichtungen 34 können separat oder einzeln höhenverstellbar ausgebildet sein, so dass der beschriebene Offset bei den Wirklängen der Zugmittel 35 wahlweise manuell oder automatisiert eingestellt werden kann. Ferner können auch die weiteren Varianten, wie zum Beispiel eine Änderung der Vorspannung des jeweiligen Federwirkmoduls 41, eine Sperrung der Auslenkung des Zugmittelführungsmoduls 40 und die anderen Varianten in der Zugmitteleinrichtung 34 umgesetzt werden.

### Bezugszeichenliste

- 1: Presse
- 2: Pressenetage
- 3: Andrückeinrichtung
- 4: Anschlageinrichtung
- 5: Stempel
- 6: Werkstück
- 7: Stapel
- 8: Temperierplatte
- 9: Ablöseförderbandeinrichtung
- 10: Förderbandeinrichtung
- 11: Förderband
- 12: erste Förderrolle
- 13: zweite Förderrolle
- 14: Pressenförderbandeinrichtung
- 15: Zuführförderbandeinrichtung
- 16: Abführförderbandeinrichtung
- 17: Beladeeinrichtung
- 18: Entladeeinrichtung
- 19: Verfahranordnung
- 20: Zuführspalt
- 21: Abführspalt
- 22: aktiver Förderbandabschnitt
- 23: Wickelübergang
- 24: Anlageabschnitt
- 25: Umlenkkörper
- 26: Wechselkassette
- 27: Haftabschnitt
- 28: Vorlaufabschnitt
- 29: Nachlaufabschnitt
- 30: Umschlagbereich
- 31: Freiabschnitt
- 32: Hauptablöselinie
- 33: Ablöseumlenkkörper
- 34: Zugmitteleinrichtung
- 35: Zugmittel
- 36: Seiltrommel
- 37: Wickelbereich
- 38: Hauptzugmittel
- 39: Hauptwickelbereich
- 40: Zugmittelführungsmodul
- 41: Federwirkmodul
- 42: Druckfedern
- 43: Zugmittelführungsmodulanschlageinrichtung
- 44: Andockrestgewichtskraft
- 45: Andockrestzugkraft
- 46: Zugmittelführungsmodulsperreinrichtung
- 47: Zugmittelvorspannungsänderungseinrichtung
- 48: Steuerkonturen
- 49: mechanisches Übertragungsglied
- 50: Pressengestell
- 51: Grundkörper
- 52: Linearführung
- 53: Tragarm
- 54: Gehäuse der Zugmitteleinrichtung
- 55: Wickelförderbandeinrichtung

## Patentansprüche

1. Presse (1) mit einer Mehrzahl von Pressenetagen (2), wobei die Pressenetagen (2) in einem Stapel anordenbar (7) sind,
mit einer Andrückeinrichtung (3) zum Ausüben einer Andrückkraft auf den Stapel (7),
mit einer Anschlageinrichtung (4), wobei der Stapel (7) zwischen der Andrückeinrichtung (3) und der Anschlageinrichtung (4) angeordnet und/oder anordenbar ist, so dass der Stapel (7) mit der Andrückkraft beaufschlagt werden kann,
mit einer Verfahranordnung (19) zum Verfahren der Pressenetagen (2) in Richtung der Anschlageinrichtung,
wobei die Verfahranordnung (19) mindestens ein Zugmittel (35) für jede der Pressenetagen (2) aufweist, wobei das Zugmittel (35) mit der Pressenetage (2) wirkverbunden ist, um die Pressenetage (2) in Richtung der Anschlageinrichtung (4) zu verfahren,
**dadurch gekennzeichnet, dass**
die Verfahranordnung (19) mindestens eine Zugmitteleinrichtung (34) aufweist, wobei die Zugmitteleinrichtung (34) ein Zugmittelführungsmodul (40) und ein Federwirkmodul (41) aufweist, wobei das Zugmittelführungsmodul (40) das Zugmittel (35) führt und das Federwirkmodul (41) das Zugmittelführungsmodul (40) mit einer Federkraft beaufschlagen kann, so dass die Federkraft über das Zugmittelführungsmodul (40) auf das Zugmittel (35) gegen die Gewichtskraft der wirkverbundenen Pressenetage (2) wirkt.

2. Presse (1) nach Anspruch 1, **dadurch gekennzeichnet, dass** das Zugmittelführungsmodul (40) als eine Führungsrolle oder als ein Gleitkörper und/oder das Federwirkmodul (41) als ein Federmodul ausgebildet ist.

3. Presse (1) nach Anspruch 1 oder 2, **dadurch gekennzeichnet, dass** die Zugmitteleinrichtung (34) ausgebildet ist, bei geöffneter Presse das Zugmittelführungsmodul (40) lagedefiniert zu halten, so dass die Pressenetage (2) über das Zugmittel (35) in einer definierten Höhenposition angeordnet ist, und bei dem Übergang zu der geschlossenen Presse (1) und/oder bei geschlossener Presse (1) das Zugmittel (35) mit der Federkraft zu beaufschlagen,

4. Presse (1) nach einem der vorhergehenden Ansprüche, **dadurch gekennzeichnet, dass** mindestens eine der Zugmitteleinrichtungen (34) als eine Zugmittelführungsmodulanschlageinrichtung (43) ausgebildet ist, wobei die Zugmittelführungsmodulanschlageinrichtung (43) bei geöffneter Presse das Zugmittelführungsmodul (40) in einem Anschlagzustand lagedefiniert hält.

5. Presse (1) nach Anspruch 4, **dadurch gekennzeichnet, dass** bei geöffneter Presse die Zugmittelführungsmodulanschlageinrichtung (43) das Zugmittelführungsmodul (40) in einem Maximalwirklängenanschlagzustand lagedefiniert hält und eine Maximalwirklänge für das Zugmittel (35) an der Pressenetage (2) bewirkt.

6. Presse (1) nach Anspruch 4 oder 5, **dadurch gekennzeichnet, dass** bei geöffneter Presse (1) die Zugmittelführungsmodulanschlageinrichtung (43) das Zugmittelführungsmodul (40) in einem Minimalwirklängenanschlagzustand lagedefiniert hält und eine Minimalwirklänge für das Zugmittel (35) an der Pressenetage (2) bewirkt.

7. Presse (1) nach einem der vorhergehenden Ansprüche 4 bis 6, **dadurch gekennzeichnet, dass** die Zugmitteleinrichtung (34) als eine Zugmittelführungsmodulsperreinrichtung (46) ausgebildet ist, wobei die Zugmittelsperreinrichtung (46) bei geöffneter Presse (1) das Zugmittelführungsmodul (40) in beide oder alle Auslenkungsrichtungen lagedefiniert hält.

8. Presse (1) nach einem der vorhergehenden Ansprüche 4 bis 7, **dadurch gekennzeichnet, dass** die Zugmitteleinrichtung (34) als eine Zugmittelvorspannungsänderungseinrichtung (47) ausgebildet ist, wobei bei geöffneter Presse (41) die Zugmittelvorspannungsänderungseinrichtung (47) eine Vorspannung auf das Zugmittelführungsmodul (40) ändert, so dass das Zugmittelführungsmodul (40) in einem Minimalwirklängenanschlagzustand lagedefiniert ist und eine Minimalwirklänge für das Zugmittel (35) an der Pressenetage (2) bewirkt oder dass das Zugmittelführungsmodul (34) in einem Maximalwirklängenanschlagzustand lagedefiniert ist und eine Maximalwirklänge für das Zugmittel (35) an der Pressenetage (2) bewirkt.

9. Presse (1) nach einem der vorhergehenden Ansprüche, **dadurch gekennzeichnet, dass** die Zugmitteleinrichtung (34) ausgebildet ist, einen Offset des Zugmittels (35) in der Wirklänge und/oder die Federkraft des Federwirkmoduls (41) manuell und/oder automatisiert einstellbar zu verändern.

10. Presse (1) nach einem der vorhergehenden Ansprüche, **dadurch gekennzeichnet, dass** die Zugmitteleinrichtungen (34) der Zugmittel (35) für die Pressenetagen (2) so ausgewählt und/oder eingestellt sind, so dass beim Übergang in den geschlossenen Pressenzustand Unterschiede bei den Anlagekräften der Pressenetagen (2) in dem Stapel (7) kompensiert und/oder einstellbar sind.

11. Presse (1) nach Anspruch 10, **dadurch gekennzeichnet, dass** beim Übergang in den geschlossenen Pressenzustand die Wirklängen der Zugmittel (35) durch die Zugmitteleinrichtungen (34) so eingestellt sind, dass ein Teil der Pressenetagen (2) zuerst mit einem unteren Pressenetagennachbar oder der Andrückeinrichtung (3) und ein Teil der Pressenetagen (2) zuerst mit einem oberen Pressenetagennachbar oder der Anschlageinrichtung (4) kontaktiert.

12. Presse (1) nach einem der vorhergehenden Ansprüchen 10 oder 11, **dadurch gekennzeichnet, dass** beim Übergang in den geschlossenen Pressenzustand mindestens eine der Zugmittelanschlageinrichtungen (34) in dem Maximalwirklängenanschlagzustand und mindestens eine der Zugmittelanschlageinrichtungen (34) in dem Minimalwirklängenanschlagzustand ist.

13. Presse (1) nach einem der vorhergehenden Ansprüche, **dadurch gekennzeichnet, dass** diese mindestens eine Förderbandeinrichtung (10) zum Transport von einem Werkstück (6) für mindestens eine der Pressenetagen (2) aufweist, wobei die Förderbandeinrichtung (10) mit der Pressenetage (2) verbunden ist, so dass die Förderbandeinrichtung (10) mit der Pressenetage (2) beim Öffnen und Schließen der Presse (1) mitgeführt wird.

14. Presse (1) nach Anspruch 13, **dadurch gekennzeichnet, dass** die Förderbandeinrichtung (10) als eine Wickelförderbandeinrichtung (55) mit einer ersten Förderrolle (12) und einer zweiten Förderrolle (13) zum Fördern des Förderbands (11) ausgebildet ist, wobei das Förderband (11) auf den Förderrollen (12, 13) wickelbar ist, und/oder dass die Förderbandeinrichtung (10) als eine Ablöseförderbandeinrichtung (9) ausgebildet ist, wobei die Ablöseförderbandeinrichtung (9) in einem Hauptablösemodus betreibbar ist, wobei das Förderband (11) in dem Hauptablösezustand einen Umschlagbereich (30) aufweist, um das Werkstück (6) von dem Förderband (11) zu lösen, wobei der Umschlagbereich (30) von dem Förderband (11) selbstgebildet ist und/oder umlenkkörperfrei gebildet ist.

15. Verfahren zum Betreiben der Presse (1) nach einem der vorhergehenden Ansprüche, wobei das Zugmittel (35) durch die Zugmittelführungseinrichtung (34) in mindestens einem Betriebszustand der Presse (1) mit einer Zugkraft beaufschlagt wird.
